(19) Europäisches Patentamt
European Patent Office
Office européen des brevets

(11) EP 2 944 674 B1

(12) **EUROPEAN PATENT SPECIFICATION**

(45) Date of publication and mention of the grant of the patent:
**22.05.2019 Bulletin 2019/21**

(21) Application number: **14737713.9**

(22) Date of filing: **06.01.2014**

(51) Int Cl.:
***C08L 77/06*** *(2006.01)* ***C08G 69/26*** *(2006.01)*
***C08K 3/22*** *(2006.01)* ***C08K 3/32*** *(2006.01)*
***C08K 5/00*** *(2006.01)* ***G02B 5/08*** *(2006.01)*
***H01L 33/60*** *(2010.01)*

(86) International application number:
**PCT/JP2014/050029**

(87) International publication number:
**WO 2014/109300 (17.07.2014 Gazette 2014/29)**

(54) **POLYAMIDE COMPOSITION AND MOLDED ARTICLE**

POLYAMIDZUSAMMENSETZUNG UND FORMKÖRPER

COMPOSITION POLYAMIDE, ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2013 JP 2013003785**
**11.01.2013 JP 2013003788**
**17.01.2013 JP 2013006502**
**17.01.2013 JP 2013006503**

(43) Date of publication of application:
**18.11.2015 Bulletin 2015/47**

(73) Proprietor: **Asahi Kasei Kabushiki Kaisha**
**Tokyo 100-0006 (JP)**

(72) Inventors:
- **IEDA, Shinji**
**Tokyo 101-8101 (JP)**
- **FUJINO, Yoshinori**
**Tokyo 101-8101 (JP)**
- **NITTO, Yu**
**Tokyo 101-8101 (JP)**

(74) Representative: **D Young & Co LLP**
**120 Holborn**
**London EC1N 2DY (GB)**

(56) References cited:
**EP-A1- 2 610 313**
**WO-A1-2012/026413**
**FR-A1- 2 976 946**
**JP-A- 2001 081 316**
**JP-A- 2011 219 697**
**JP-A- 2014 012 773**
**KR-A- 20120 066 740**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 944 674 B1

## Description

Technical field

The present invention relates to a polyamide composition and a reflector comprising the polyamide composition.

Background Art

Polyamides represented by polyamide 6 (hereinafter, sometimes referred to as "PA6") and polyamide 66 (hereinafter, sometimes referred to as "PA66") have excellent fabricability, mechanical properties, or chemical resistance. Therefore, the polyamides are widely used as a material for various parts, such as for automobiles, electric and electronic parts, industrial materials, engineering materials, and daily and household articles.

In the automobile industry, as an environmental measure, there is a need to lighten the weight of the automobile body in order to reduce exhaust gases. To respond to this need, in place of metals, the polyamides are increasingly used for exterior materials and interior materials of automobiles. Higher levels of properties such as heat resistance, strength, and appearance are required for polyamides used for the exterior materials and interior materials of the automobiles. Above all, the need to increase the heat resistance of the polyamides used as a material in an engine room is growing stronger in order to correspond to the increase tendency of the temperature in the engine room.

In the electric and electronics industry, such as household appliances, lead-free surface-mount (SMT) solder advances. There is a need for increased heat resistance for the polyamides used for materials such as household appliances which are capable of withstanding the increased melting point of the solder required for lead-free surface-mount (SMT) solder.

However, conventional polyamides such as PA6 and PA66 are unable to satisfy these requirements in terms of heat resistance, since their melting point is low.

Then, to resolve the problem of the heat resistance of the conventional polyamides such as PA6 and PA66, a high-melting-point polyamide has been proposed. Specifically, a polyamide formed from terephthalic acid and hexamethylenediamine (hereinafter, sometimes referred to as "PA6T") has been proposed.

However, PA6T is a high-melting-point polyamide having a melting point of about 370°C. Therefore, even if a molded product is obtained by melt kneading from PA6T, pyrolysis of the polyamide is caused in a forming process, which makes it difficult to obtain a molded product having sufficient properties.

To resolve the problem of the pyrolysis of PA6T, a high-melting-point semi-aromatic polyamide (hereinafter, sometimes referred to as "6T copolymer polyamide") having a melting point lowered to about 220 to 340°C has been proposed. This high-melting-point semi-aromatic polyamide is obtained by copolymerizing an aliphatic polyamide, such as PA6 and PA66, an amorphous aromatic polyamide (hereinafter, sometimes referred to as "PA6I") prepared from isophthalic acid and hexamethylenediamine, with PA6T, and has terephthalic acid and hexamethylenediamine as main components.

For example, as the 6T copolymer polyamide, Patent Literature 1 discloses an aromatic polyamide which is formed from an aromatic dicarboxylic acid and an aliphatic diamine, in which the aliphatic diamine is a mixture of hexamethylenediamine and 2-methylpentamethylenediamine (hereinafter, sometimes referred to as "PA6T/2MPDT").

Patent Literature 2 discloses a semi-alicyclic polyamide blended with 1 to 40% of 1,4-cyclohexanedicarboxylic acid as a dicarboxylic acid unit. Patent Literature 2 discloses that the electric and electronic parts containing the semi-alicyclic polyamide have improved solder heat resistance.

Furthermore, Patent Literature 3 discloses a polyamide composition containing a polyamide resin (hereinafter, sometimes referred to as "PA9T") composed of a dicarboxylic acid containing a terephthalic acid and a diamine containing a 1,9-nonanediamine unit and/or a 2-methyl-1,8-octanediamine unit, titanium oxide, magnesium hydroxide, and a specific reinforcement material. Patent Literature 3 discloses that the polyamide composition has excellent heat resistance.

In addition, Patent Literature 4 discloses a polyamide composition containing a semi-alicyclic polyamide blended with 70% or more 1,4-cyclohexanedicarboxylic acid as a dicarboxylic acid unit, titanium oxide, and an inorganic filler in which weight ratios thereof are set to predetermined values. Patent Literature 4 discloses that the polyamide composition has excellent reflow resistance and heat resistance.

FR 2976946 relates to a composition including 30 to 97 wt % of at least one semi-aromatic polyamide, 2 to 50 wt % of white pigments, 0 to 50 wt % of strengthening agents, 0.1, to 10 wt % of at least one metal hydroxide and/or of at least one metal oxide other than a transition metal oxide, and up to 3 wt % of an organic phosphite.

KR 2012 0066740 relates to a polyamide resin composition with heat resistance and moisture resistance without degrading reflectivity and physical properties.

EP 2610313 relates to a polyamide resin composition comprising (A) 10 to 70 % by weight of a crystalline polyamide resin, (B) 10 to 70 % by weight of an amorphous polyamide resin, (C) 5 to 30 % by weight of an inorganic filler, and (D) 10 to 50 % by weight of a white pigment.

Citation List

Patent Literature

Patent Literature 1: National Publication of International Patent Application No. H6-503590
Patent Literature 2: National Publication of International Patent Application No. H11-512476
Patent Literature 3: Japanese Patent Laid-Open No. 2006-257314
Patent Literature 4: Japanese Patent Laid-Open No. 2011-219697

Summary of Invention

Technical Problem

However, the conventional polyamides or polyamide compositions disclosed in Patent Literatures 1 to 4 and the above-mentioned prior art are insufficient in that all of reflow resistance, heat discoloration resistance, light discoloration resistance, and extrusion processability are combined. Improvements in these properties are further required.

In view of the problems, it is an object of the present invention to provide a polyamide composition having excellent whiteness, reflow resistance, heat discoloration resistance, light discoloration resistance, and extrusion processability.

Solution to Problem

As a result of diligent research to resolve the problems, the present inventors discovered that the problems could be resolved by a polyamide composition containing a polyamide, titanium oxide, and a phosphorus-based compound in a predetermined ratio, thereby completing the present invention.

More specifically, the present invention is as follows.

[1] A polyamide composition comprising:

a polyamide (A) comprising a dicarboxylic acid unit (a) and a diamine unit (b);
20 to 70 mass% of titanium oxide (B); and
0.5 to 7.5 mass% of a phosphorus-based compound (C), wherein the phosphorus-based compound (C) is a metal hypophosphite.

[2] The polyamide composition according to [1], wherein the dicarboxylic acid unit (a) comprises 50 mol% or more of an alicyclic dicarboxylic acid unit (a-1).
[3] The polyamide composition according to [1], wherein the dicarboxylic acid unit (a) comprises more than 50 mol% of an aromatic dicarboxylic acid unit (a-2).
[4] The polyamide composition according to any one of [1] to [3], wherein a phosphorus element concentration is 1,400 to 20,000 ppm.
[5] The polyamide composition according to any one of [1] to [4], wherein a content of the titanium oxide (B) is 30 to 65 mass%.
[6] The polyamide composition according to any one of [1] to [5], wherein the polyamide (A) has a melting point of 270 to 350°C.
[7] The polyamide composition according to any one of [1] to [6], wherein the alicyclic dicarboxylic acid unit (a-1) comprises a unit derived from 1,4-cyclohexanedicarboxylic acid.
[8] The polyamide composition according to any one of [1] to [7], wherein the phosphorus-based compound (C) comprises an alkaline earth metal salt.
[9] The polyamide composition according to any one of [1] to [8], wherein a ratio of a metal element concentration to the phosphorus element concentration is 0.3 to 0.8, wherein the ratio is measured using ICP emission spectrochemical analysis.
[10] The polyamide composition according to any one of [1] to [9], further comprising an antioxidant (D), wherein the antioxidant (D) comprises a phenolic antioxidant (D-1) and/or an amine-based antioxidant (D-2).
[11] A reflector comprising the polyamide composition according to any one of [1] to [10].

Advantageous Effect of Invention

The present invention can provide a polyamide composition having excellent whiteness, reflow resistance, heat discoloration resistance, light discoloration resistance, and extrusion processability.

Description of Embodiment

Hereinafter, a mode for carrying out the present invention (hereinafter, referred to as "present embodiment") will be described in detail. However, the present invention is not limited to the following embodiment, and can be variously modified within the scope of the invention as set out in the appended claims.

[Polyamide composition]

A polyamide composition of the present embodiment comprises:

a polyamide (A) comprising a dicarboxylic acid unit (a) and a diamine unit (b);
20 to 70 mass% of titanium oxide (B); and
0.5 to 7.5 mass% of a phosphorus-based compound (C), wherein the phosphorus-based compound (C) is a metal hypophosphite.

[Polyamide (A)]

The polyamide (A) used in the present embodiment has the dicarboxylic acid unit (a) and the diamine unit (b). In the present embodiment, "polyamide" means a polymer which has an amide (-NHCO-) bond in a main chain.

The total amount of the dicarboxylic acid unit (a) and the diamine unit (b) is preferably 20 to 100 mol%, more preferably 90 to 100 mol%, and still more preferably 100 mol% based on 100 mol% of the total constitutional unit of the polyamide (A). Examples of the constitutional unit of the polyamide (A) other than the dicarboxylic acid unit (a) and the diamine unit (b) in the polyamide (A) include, but not particularly limited to, a lactam unit (c-1) and an aminocarboxylic acid unit (c-2) which will be described later. The ratio of each constitutional unit which constitutes the polyamide (A) in the present embodiment can be measured by nuclear magnetic resonance spectroscopy (NMR).

<Dicarboxylic acid unit (a)>

Examples of the dicarboxylic acid unit (a) include, but not particularly limited to, an alicyclic dicarboxylic acid unit (a-1), an aromatic dicarboxylic acid unit (a-2), and an aliphatic dicarboxylic acid unit (a-3).

(Alicyclic dicarboxylic acid unit (a-1))

Examples of the alicyclic dicarboxylic acid which constitutes the alicyclic dicarboxylic acid unit (a-1) include, but not particularly limited to, dicarboxylic acids having an alicyclic group having 3 to 10 carbon atoms. Among these, dicarboxylic acids having an alicyclic group having 5 to 10 carbon atoms are preferable. The alicyclic group of the alicyclic dicarboxylic acid may be unsubstituted, or may have a substituent. Examples of the substituent include, but not particularly limited to, include alkyl groups having 1 to 4 carbon atoms such as a methyl group, an ethyl group, an n-propyl group, an isopropyl group, an n-butyl group, an isobutyl group, and a tert-butyl group.

The alicyclic dicarboxylic acid unit (a-1) has a trans geometric isomer or a cis geometric isomer. In the polyamide (A), the ratio of the trans isomer in the total alicyclic dicarboxylic acid unit (a-1) is referred to as a "trans isomer ratio". The trans isomer ratio is preferably 50 to 85 mol%, more preferably 50 to 80 mol%, and still more preferably 60 to 80 mol%. When the trans isomer ratio is within the range above, in addition to the features of a high melting point, and excellent toughness and rigidity, the polyamide composition tends to have properties in which rigidity during heating due to a high glass transition temperature (Tg), fluidity which is usually contradictory to the heat resistance, and high crystallinity are simultaneously satisfied. These features are particularly remarkable in the polyamide (A) obtained from a combination of the dicarboxylic acid unit (a) comprising 50 mol% or more of 1,4-cyclohexanedicarboxylic acid and the diamine unit (b) comprising 50 mol% or more of 2-methylpentamethylenediamine in which the trans isomer ratio is 50 to 85 mol%. In the present embodiment, the trans isomer ratio can be measured by the method according to Examples below.

The alicyclic dicarboxylic acid which constitutes the alicyclic dicarboxylic acid unit (a-1) has trans and cis geometric isomers. The alicyclic dicarboxylic acid used as a raw material monomer may be either a trans or a cis isomer. The alicyclic dicarboxylic acid may also be used as a mixture of trans and cis isomers in a predetermined ratio. It is

known that alicyclic dicarboxylic acids isomerize at high temperatures, and the trans isomer and the cis isomer are present in a fixed ratio. The alicyclic dicarboxylic acid of the cis isomer tends to have a higher water solubility than the alicyclic dicarboxylic acid of the trans isomer in an equivalent amount of salt of the alicyclic dicarboxylic acid with a diamine. For this reason, the trans isomer/cis isomer ratio (molar ratio) of the alicyclic dicarboxylic acid as a raw material monomer is preferably 50/50 to 0/100, more preferably 40/60 to 10/90, and still more preferably 35/65 to 15/85. The alicyclic dicarboxylic acid trans isomer/cis isomer ratio (molar ratio) can be determined by liquid chromatography (HPLC) or nuclear magnetic resonance spectroscopy (NMR).

Examples of the alicyclic dicarboxylic acid which constitutes the alicyclic dicarboxylic acid unit (a-1) include, but not particularly limited to, 1,4-cyclohexanedicarboxylic acid, 1,3-cyclohexanedicarboxylic acid, and 1,3-cyclopentanedicarboxylic acid. Among these, 1,4-cyclohexanedicarboxylic acid is preferable. When the polyamide composition comprises the alicyclic dicarboxylic acid as the constitutional unit, the polyamide composition tends to have more excellent heat resistance, low water absorbance, and rigidity. The alicyclic dicarboxylic acid which constitutes the alicyclic dicarboxylic acid unit (a-1) may be used alone, or two or more kinds thereof may be used in combination.

The proportion of the alicyclic dicarboxylic acid unit (a-1) is preferably 50 to 100 mol%, more preferably 60 to 100 mol%, still more preferably 70 to 100 mol%, and particularly preferably 100 mol% based on the total dicarboxylic acid unit (a). When the proportion (mol%) of the alicyclic dicarboxylic acid unit (a-1) in the dicarboxylic acid unit (a) is within the range above, a polyamide composition simultaneously satisfying heat resistance, fluidity, toughness, low water absorbance, and rigidity tends to be obtained.

(Aromatic dicarboxylic acid unit (a-2))

Examples of the aromatic dicarboxylic acid which constitutes the aromatic dicarboxylic acid unit (a-2) include, but not particularly limited to, dicarboxylic acids having a phenyl group and a naphthyl group. An aromatic group of the aromatic dicarboxylic acid may be unsubstituted, or may have a substituent. Examples of the substituent include, but not particularly limited to, an alkyl group having 1 to 4 carbon atoms, an aryl group having 6 to 10 carbon atoms, an arylalkyl group having 7 to 10 carbon atoms, a halogen group such as a chloro group or a bromo group, a silyl group having 1 to 6 carbon atoms, and a sulfonic acid group and salts thereof (e.g. a sodium salt).

Examples of the aromatic dicarboxylic acid include, but not particularly limited to, aromatic dicarboxylic acids, which are unsubstituted or substituted with various substituents such as terephthalic acid, isophthalic acid, naphthalene dicarboxylic acid, 2-chloroterephthalic acid, 2-methylterephthalic acid, 5-methylisophthalic acid, and 5-sodium sulfoisophthalic acid and having 8 to 20 carbon atoms. The aromatic dicarboxylic acid which constitutes the aromatic dicarboxylic acid unit (a-2) may be used alone, or two or more kinds thereof may be used in combination.

The proportion of the aromatic dicarboxylic acid unit (a-2) is preferably more than 50 mol% and 100 mol% or less, more preferably 60 to 100 mol%, still more preferably 70 to 100 mol%, and particularly preferably 100 mol% based on the total dicarboxylic acid unit (a). When the proportion (mol%) of the aromatic dicarboxylic acid unit (a-2) in the dicarboxylic acid unit (a) is within the range above, heat resistance, low water absorbance, and rigidity tend to be further improved.

(Aliphatic dicarboxylic acid unit (a-3))

Examples of the aliphatic dicarboxylic acid which constitutes the aliphatic dicarboxylic acid unit (a-3) include, but not particularly limited to, straight-chain or branched saturated aliphatic dicarboxylic acids having 3 to 20 carbon atoms, such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyl adipic acid, pimelic acid, suberic acid, azelaic acid, sebacic acid, dodecanedioic acid, tetradecanedioic acid, hexadecanedioic acid, octadecanedioic acid, eicosane diacid, and diglycolic acid.

Among these, the aliphatic dicarboxylic acid preferably has 6 or more carbon atoms, and more preferably 10 or more carbon atoms. The aliphatic dicarboxylic acid is used, and thereby the polyamide composition tends to have more excellent heat resistance, fluidity, toughness, low water absorbance, and rigidity. Examples of the aliphatic dicarboxylic acid having 10 or more carbon atoms include, but not particularly limited to, sebacic acid, dodecanedioic acid, tetradecanedioic acid, hexadecanedioic acid, octadecanedioic acid, and eicosanedioic acid. Among these, from the viewpoint of the heat resistance of the polyamide composition, sebacic acid and dodecanedioic acid are preferable. The aliphatic dicarboxylic acid which constitutes the aliphatic dicarboxylic acid unit (a-3) may be used alone, or two or more kinds thereof may be used in combination.

The proportion of the aliphatic dicarboxylic acid unit (a-3) is preferably 0 to 50 mol%, more preferably 0 to 40 mol%, and still more preferably 0 to 30 mol% based on the total dicarboxylic acid unit (a). When the proportion (mol%) of the aliphatic dicarboxylic acid unit (a-3) in the dicarboxylic acid unit (a) is within the range above, a polyamide composition simultaneously satisfying more excellent heat resistance, fluidity, toughness, low water absorbance, and rigidity

tends to be obtained.

When the aliphatic dicarboxylic acid unit (a-3) having 10 or more carbon atoms is comprised, the proportion of the aliphatic dicarboxylic acid unit (a-3) having 10 or more carbon atoms is preferably 0.1 to 50 mol%, more preferably 5 to 40 mol%, and still more preferably 5 to 20 mol% based on the total dicarboxylic acid unit (a). When the proportion of the aliphatic dicarboxylic acid unit (a-3) having 10 or more carbon atoms is within the range above, a polyamide composition simultaneously satisfying more excellent heat resistance, fluidity, toughness, low water absorbance, and rigidity tends to be obtained.

In the present embodiment, the dicarboxylic acid which constitutes the dicarboxylic acid unit (a) is not limited to the compounds described above as dicarboxylic acids. A compound equivalent to the dicarboxylic acids described above can be used. Herein, the "compound equivalent to the dicarboxylic acids" means a compound which can have the same dicarboxylic acid structure as a dicarboxylic acid structure derived from the dicarboxylic acids. Examples of the compound include, but not particularly limited to, anhydrides and halides of the dicarboxylic acid.

The polyamide (A) may further comprise a unit derived from a trivalent or higher polyvalent carboxylic acid, such as trimellitic acid, trimesic acid, and pyromellitic acid as needed. The trivalent or higher polyvalent carboxylic acid may be used alone, or two or more kinds thereof may be used in combination.

<Diamine unit (b)>

Examples of the diamine unit (b) include, but not particularly limited to, a diamine unit (b-1) having a substituent branched from a main chain, an aliphatic diamine unit (b-2), an alicyclic diamine unit (b-3), and an aromatic diamine unit (b-4).

(Diamine unit having substituent branched from main chain (b-1))

The diamine unit (b) preferably comprises the diamine unit (b-1) having the substituent branched from the main chain. When the diamine unit (b-1) is comprised, a polyamide composition capable of simultaneously satisfying more excellent fluidity, toughness, and rigidity tends to be obtained. Examples of the substituent branched from the main chain in the diamine unit (b-1) include, but not particularly limited to, alkyl groups having 1 to 4 carbon atoms, such as a methyl group, an ethyl group, a n-propyl group, an isopropyl group, a n-butyl group, an isobutyl group, and a tert-butyl group.

Examples of the diamine which constitutes the diamine unit (b-1) include, but not particularly limited to, branched saturated aliphatic diamines having 3 to 20 carbon atoms such as 2-methylpentamethylenediamine (hereinafter, sometimes referred to as "2-methyl-1,5-diaminopentane"), 2,2,4-trimethylhexamethylenediamine, 2,4,4-trimethylhexamethylenediamine, 2-methyloctamethylenediamine, and 2,4-dimethyloctamethylenediamine. Among these, 2-methylpentamethylenediamine is preferable. When the polyamide composition comprises the diamine unit (b-1), the polyamide composition tends to have more excellent heat resistance and rigidity. The diamine unit (b-1) may be used alone, or two or more kinds thereof may be used in combination.

The proportion of (mol%) of the diamine unit (b-1) is preferably 50 to 100 mol%, more preferably 60 to 100 mol%, still more preferably 85 to 100 mol%, still more preferably 90 to 100 mol%, and yet still more preferably is 100 mol% based on the total diamine unit (b). When the proportion of the diamine unit (b-1) is within the range above, the polyamide composition tends to have excellent fluidity, toughness, and rigidity.

(Aliphatic diamine unit (b-2))

Examples of the aliphatic diamine (excluding the diamine having the substituent branched from the main chain) which constitutes the diamine unit (b-2) include, but not particularly limited to, linear saturated aliphatic diamines having 2 to 20 carbon atoms such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, and tridecamethylenediamine.

(Alicyclic diamine unit (b-3))

The alicyclic diamine which constitutes the diamine unit (b-3) is not particularly limited as long as the alicyclic diamine is a diamine comprising an alicyclic group. Examples of the alicyclic diamine include 1,4-cyclohexanediamine, 1,3-cyclohexanediamine, and 1,3-cyclopentanediamine.

(Aromatic diamine unit (b-4))

The aromatic diamine which constitutes the diamine unit (b-4) is not particularly limited as long as the aromatic

diamine is a diamine comprising an aromatic group. Examples of the aromatic diamine include meta-xylylenediamine.

Among the diamine units (b-2) to (b-4), preferred are the aliphatic diamine unit (b-2) (excluding the diamine unit (b-1)) and the alicyclic diamine unit (b-3). More preferred is the diamine unit (b-2) having a straight-chain saturated aliphatic group having 4 to 13 carbon atoms. Still more preferred is the diamine unit (b-2) having a straight-chain saturated aliphatic group having 6 to 10 carbon atoms. Yet still more preferred is hexamethylenediamine. The diamine is used, and thereby the polyamide composition tends to have more excellent heat resistance, fluidity, toughness, low water absorbance, and rigidity. The diamine may be used alone, or two or more kinds thereof may be used in combination.

The total proportion (mol%) of the diamine units (b-2) to (b-4) is preferably 0 to 50 mol%, more preferably 0 to 40 mol%, and still more preferably 0 to 30 mol% based on the total diamine unit (b). When the proportion of the diamine unit (b-2) in the diamine unit (b) is within the range above, the polyamide composition tends to have more excellent fluidity, toughness, and rigidity.

The polyamide (A) may further comprise a trivalent or higher polyvalent aliphatic amine such as bishexamethylenetriamine as needed. The trivalent or higher polyvalent aliphatic amine may be used alone, or two or more kinds thereof may be used in combination.

<Lactam unit (c-1) and/or aminocarboxylic acid unit (c-2) >

The polyamide (A) can further comprise the lactam unit (c-1) and/or the aminocarboxylic acid unit (c-2). When a polyamide composition comprises the unit (c-1) and/or the unit (c-2), the polyamide composition having more excellent toughness tends to be obtained. Herein, a lactam and aminocarboxylic acid which constitute the lactam unit (c-1) and the aminocarboxylic acid unit (c-2) mean a polymerizable (polycondensable) lactam and aminocarboxylic acid.

The lactam and aminocarboxylic acid which constitute the lactam unit (c-1) and the aminocarboxylic acid unit (c-2) are not particularly limited. For example, preferred are a lactam and aminocarboxylic acid having 4 to 14 carbon atoms. More preferred are a lactam and aminocarboxylic acid having 6 to 12 carbon atoms.

Examples of the lactam which constitutes the lactam unit (c-1) include, but not particularly limited to, butyrolactam, pivalolactam, ε-caprolactam, caprylolactam, enantholactam, undecanolactam, and laurolactam (dodecanolactam). Among these, as the lactam, preferred are ε-caprolactam and laurolactam, and more preferred is ε-caprolactam. When the polyamide composition comprises the lactam, the polyamide composition has more excellent toughness.

Examples of the aminocarboxylic acid which constitutes the aminocarboxylic acid unit (c-2) include, but not particularly limited to, ω-aminocarboxylic acid and α,ω-aminocarboxylic acid, which are compounds obtained by opening the ring of the lactams. As the aminocarboxylic acid, a straight-chain or branched saturated aliphatic carboxylic acid having 4 to 14 carbon atoms substituted at the ω position with an amino group is preferred. Examples of the aminocarboxylic acid include, but not particularly limited to, 6-aminocaproic acid, 11-aminoundecanoic acid, 12-aminododecanoic acid, and para-aminomethylbenzoic acid.

The lactam and/or aminocarboxylic acid which constitute the lactam unit (c-1) and the aminocarboxylic acid unit (c-2) may be used alone, or two or more kinds thereof may be used in combination.

The total proportion (mol%) of the lactam unit (c-1) and the aminocarboxylic acid unit (c-2) is preferably 0 to 20 mol%, more preferably 0 to 15 mol%, and still more preferably 0 to 10 mol% based on the total polyamide (A). When the total proportion of the lactam unit (c-1) and the aminocarboxylic acid unit (c-2) is within the range above, toughness tends to be further improved.

<End-capping agent>

The end of the polyamide (A) may be capped by a known end-capping agent. The heat resistance, fluidity, toughness, low water absorbance, and rigidity of the polyamide composition tend to be further improved by using the polyamide (A) having the capped end. When the polyamide (A) is produced from the dicarboxylic acid, the diamine, and the lactam and aminocarboxylic acid used as needed, the end-capping agent can be added as a molecular weight adjuster.

Examples of the end-capping agent include, but not particularly limited to, monocarboxylic acids, monoamines, acid anhydrides such as phthalic anhydride, monoisocyanates, monoacid halides, monoesters, and monoalcohols. Among these, monocarboxylic acids and monoamines are preferred. The end of the polyamide (A) is capped with the end-capping agent, and thereby the thermal stability of the polyamide composition tends to be further improved. The end-capping agent may be used alone, or two or more kinds thereof may be used in combination.

The monocarboxylic acid which can be used as the end-capping agent are not particularly limited, as long as the monocarboxylic acid is reactive with an amino group which may be present in the end of the polyamide (A). Examples thereof include: aliphatic monocarboxylic acids such as formic acid, acetic acid, propionic acid, butyric acid, valeric acid, caproic acid, caprylic acid, lauric acid, tridecyl acid, myristyl acid, pulmitic acid, stearic acid, pivalic acid, and isobutyric acid; alicyclic monocarboxylic acids such as cyclohexane carboxylic acid; and aromatic monocarboxylic acids such as benzoic acid, toluic acid, α-naphthalene carboxylic acid, β-naphthalene carboxylic acid, methylnaphthalene carboxylic

acid, and phenylacetic acid. The monocarboxylic acid may be used alone, or two or more kinds thereof may be used in combination.

The monoamine which can be used as the end-capping agent is not particularly limited, as long as the monoamine is reactive with a carboxyl group which may be present in the end of the polyamide (A). Examples thereof include: aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; and aromatic monoamines such as aniline, toluidine, diphenylamine, and naphthylamine. The monoamine may be used alone, or two or more kinds thereof may be used in combination.

<Production method of polyamide (A)>

The production method of the polyamide (A) is not particularly limited. However, for example, the production method preferably includes a polymerizing step of polymerizing a dicarboxylic acid which constitutes a dicarboxylic acid unit (a) and a diamine which constitutes a diamine unit (b), and a lactam and/or aminocarboxylic acid which constitute a lactam unit (c-1) and/or an aminocarboxylic acid unit (c-2) as needed, to obtain a polymer. The production method preferably further includes a step of increasing the degree of polymerization of the polyamide. The production method may include a capping step of capping the end of the obtained polymer with the end-capping agent as needed.

Specific examples of the methods for producing the polyamide (A) include the following various methods:

1) Heating an aqueous solution or an aqueous suspension of a dicarboxylic acid and a diamine salt, or a mixture of a dicarboxylic acid and a diamine, and polymerizing while maintaining the melt state (hereinafter, sometimes referred to as a "hot melt polymerization method").
2) Increasing the degree of polymerization while maintaining a solid state at a temperature at or below the melting point of the polyamide obtained by the hot melt polymerization method (hereinafter, sometimes referred to as a "hot melt polymerization/solid phase polymerization method").
3) Heating an aqueous solution or an aqueous suspension of a dicarboxylic acid and a diamine salt or a mixture of a dicarboxylic acid and a diamine, and increasing the degree of polymerization by further re-melting the precipitated prepolymer with an extruder such as a kneader (hereinafter, sometimes referred to as a "prepolymer/extrusion polymerization method").
4) Heating an aqueous solution or an aqueous suspension of a dicarboxylic acid and a diamine salt or a mixture of a dicarboxylic acid and a diamine, and increasing the degree of polymerization while maintaining the precipitated prepolymer in a solid state at a temperature at or below the melting point of the polyamide (hereinafter, sometimes referred to as a "prepolymer/solid phase polymerization method").
5) Polymerizing a dicarboxylic acid and a diamine salt, or a mixture of a dicarboxylic acid and a diamine while maintaining a solid state (hereinafter, sometimes referred to as a "solid phase polymerization method").
6) Carrying out polymerization using a dicarboxylic acid halide component equivalent to a dicarboxylic acid and a diamine component (hereinafter, sometimes referred to as a "solution method").

When the polyamide (A) is produced, the added amount of the dicarboxylic acid which constitutes the dicarboxylic acid unit (a) is preferably about the same molar amount as the added amount of the diamine which constitutes the diamine unit (b). Considering escape of the diamine which constitutes the diamine unit (b) during the polymerization reaction from the reaction system in the molar ratio, the molar amount of the total dicarboxylic acid which constitutes the dicarboxylic acid unit (a) is preferably 0.9 to 1.2, more preferably 0.95 to 1.1, and still more preferably 0.98 to 1.05 based on the molar amount of 1 of the total dicarboxylic acid which constitutes the dicarboxylic acid unit (a).

In the method for producing the polyamide (A), from the viewpoint of fluidity of the polyamide, the polymerization is preferably carried out while the trans isomer ratio of the alicyclic dicarboxylic acid is maintained at 85% or less. The polymerization is more preferably carried out while the trans isomer ratio of the alicyclic dicarboxylic acid is maintained at 80% or less. Particularly, when the polymerization is carried out while the trans isomer ratio of the alicyclic dicarboxylic acid is maintained at 80% or less, a polyamide composition which has more excellent color tone and tensile elongation and has a high melting point tends to be obtained.

In the method for producing the polyamide (A), to increase the melting point of the polyamide by increasing the degree of polymerization, it is preferable to increase the polymerization temperature and/or lengthen the polymerization time. When the polymerization temperature is increased and/or the polymerization time is lengthened, the polymerization is preferably carried out while the trans isomer ratio is maintained at 80% or less. The deterioration of the coloration of the polyamide due to the heating and the deterioration of the tensile elongation due to pyrolysis tend to be able to be suppressed. The dramatic deterioration of the rate of increase of the molecular weight of the polyamide tends to be able to be suppressed.

As a method for producing the polyamide (A), the 1) hot melt polymerization method and the 2) hot melt

polymerization/solid phase polymerization method are preferable since the trans isomer ratio can be easily maintained at 85% or less, and the obtained polyamide has excellent color tone.

The polymerization mode of the production method of the polyamide (A) is not particularly limited, and may be either a batch method or a continuous method. A polymerization apparatus is not particularly limited. For example, known apparatuses such as an autoclave type reactor, a tumbler type reactor, and an extruder type reactor i.e., a kneader can be used.

Hereinafter, a method for producing a polyamide according to a batch hot melt polymerization method will be schematically shown. However, the method for producing the polyamide (A) is not limited to the following. First, an aqueous solution comprising approximately 40 to 60 mass% of the polyamide raw material components (dicarboxylic acid, diamine, and lactam and/or aminocarboxylic acid as needed) is concentrated in a concentration tank operated at a temperature of 110 to 180°C and a pressure of about 0.035 to 0.6 MPa (gauge pressure) to about 65 to 90 mass% to obtain a concentrated solution. Then, the obtained concentrated solution is transferred to an autoclave, and heating is continued until the pressure in the autoclave reaches about 1.5 to 5.0 MPa (gauge pressure). Subsequently, the pressure is kept at about 1.5 to 5.0 MPa (gauge pressure) while extracting water and/or the gas component in the autoclave. When the temperature reaches about 250 to 350°C, the pressure is started to be reduced to atmospheric pressure (gauge pressure of 0 MPa). After reducing the pressure in the autoclave to atmospheric pressure, the water produced as a byproduct can be effectively removed by further reducing the pressure as needed. Then, the pressure is increased with an inert gas such as nitrogen in the autoclave, and a polyamide melt product is extruded as a strand from the autoclave. The extruded strand is cooled and cut, and thereby a pellet of the polyamide (A) can be obtained.

Hereinafter, a method for producing a polyamide according to a continuous hot melt polymerization method will be schematically shown. First, an aqueous solution comprising approximately 40 to 60 mass% of the polyamide raw material components (dicarboxylic acid, diamine, and lactam and/or aminocarboxylic acid as needed) is pre-heated in the vessel of a preliminary apparatus to a temperature of about 40 to 100°C. Then, the pre-heated aqueous solution is transferred to a concentration tank/reactor, and concentrated to about 70 to 90% at a pressure of about 0.1 to 0.5 MPa (gauge pressure) and a temperature of about 200 to 270°C to obtain a concentrated solution. The obtained concentrated solution is then discharged into a flusher having a temperature maintained at about 200 to 350°C. Subsequently, the pressure in the flasher is reduced to atmospheric pressure (gauge pressure of 0 MPa). After reducing the pressure in the flasher to atmospheric pressure, the pressure is reduced as needed. Then, a polyamide melt product is extruded as a strand from the flasher. The extruded strand is cooled and cut, and thereby a pellet of the polyamide (A) can be obtained.

<Polymer terminal of polyamide (A)>

Examples of the polymer terminal of the polyamide (A) include, but not particularly limited to, an amino terminal, a carboxyl terminal, a cyclic amino terminal, a terminal capped by a capping agent, and other terminal.

The amino terminal is a polymer terminal having an amino group ($-NH_2$ group) and is derived from the diamine unit (b) used as the raw material. The amount of the amino terminal is preferably 20 to 100 $\mu$ equivalents/g, more preferably 20 to 70 $\mu$ equivalents/g, and still more preferably is 20 to 50 $\mu$ equivalents/g based on 1 g of the polyamide (A). When the amount of the amino terminal is within the range above, the polyamide composition tends to have more excellent whiteness, reflow resistance, heat discoloration resistance, light discoloration resistance, hydrolysis resistance, and thermal residence stability. The amount of the amino terminal can be measured by neutralization titration.

The carboxyl terminal is a polymer terminal having a carboxyl group (-COOH group) and is derived from the dicarboxylic acid unit (a) used as the raw material. The amount of the carboxyl terminal is preferably 20 to 100 $\mu$ equivalents/g, more preferably 25 to 70 $\mu$ equivalents/g, and still more preferably 20 to 50 $\mu$ equivalents/g based on 1 g of the polyamide (A). When the amount of the carboxyl terminal is within the range above, the polyamide composition tends to have more excellent whiteness, reflow resistance, heat discoloration resistance, and light discoloration resistance. The amount of the carboxyl terminal can be measured by neutralization titration.

The cyclic amino terminal is a polymer terminal having an cyclic amino group (group represented by the following formula 1). In the following formula 1, R represents a substituent bonded to carbon which constitutes a piperidine ring. Specific examples of R include a hydrogen atom, a methyl group, an ethyl group, and a t-butyl group. Even if piperidine formed by cyclization of the raw material diamine having a pentamethylenediamine skeleton by a deammoniation reaction is bonded to a polymer terminal, the piperidine is a terminal of the cyclic amino group. These structures may be formed when a monomer having a pentamethylenediamine skeleton is used.

[Chemical formula 1]

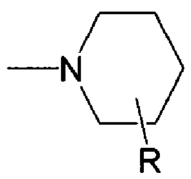

· · · (Formula 1)

The amount of the cyclic amino terminal is preferably 30 μ equivalents/g or more and 65 μ equivalents/g or less, more preferably 30 μ equivalents/g or more and 60 μ equivalents/g or less, and still more preferably 35μ equivalents/g or more and 55 μ equivalents/g or less based on 1 g of the polyamide (A). When the amount of the cyclic amino terminal is within the range above, the polyamide composition tends to have more excellent toughness, hydrolysis resistance, and processability. The amount of the cyclic amino terminal can be measured using 1H-NMR. Examples of the method includes a method for calculating the amount of the cyclic amino terminal based on the integral ratio between the hydrogen bonded to the carbon adjacent to the heterocyclic nitrogen atom of nitrogen and the hydrogen bonded to the carbon adjacent to the nitrogen atom of the amide bond in the polyamide main chain.

The cyclic amino terminal can be produced by a dehydration reaction between a cyclic amine and a carboxyl terminal, by a deammoniation reaction of an amino terminal in the polymer molecule, by adding a cyclic amine as an end-capping agent, or by cyclization of a diamine having a pentamethylenediamine skeleton as a raw material for a polyamide by a deammoniation reaction. In the present embodiment, it is preferable that the cyclic amino terminal is derived from the raw material diamine. A cyclic amino terminal derived from the raw material diamine is produced without adding a cyclic amine as an end-capping agent during the initial stages of polymerization. Thereby, the capping of a low molecular weight carboxyl terminal during the initial stages of polymerization is avoided, and the polymerization reaction rate of the polyamide is highly maintained. Consequently, a high molecular weight polymer tends to be easily obtained. Thus, when a cyclic amine is produced in the middle of the reaction, a high molecular weight polyamide (A) is easily obtained since the carboxyl terminal is capped by the cyclic amine during the late stage of polymerization.

The cyclic amine which produces the cyclic amino terminal can be produced as a byproduct during the polyamide polymerization reaction. In the production reaction of the cyclic amine, the higher the reaction temperature is, the faster the reaction speed is. Therefore, to keep the amount of the cyclic amino terminal of the polyamide (A) at a certain level, production of the cyclic amine is preferably promoted. Therefore, the polyamide polymerization reaction temperature is preferably 300°C or more, and more preferably 320°C or more.

Examples of the method for adjusting the cyclic amino terminal amount to a predetermined level include a method for controlling the cyclic amino terminal amount by appropriately adjusting the polymerization temperature, the reaction time at the reaction temperature of 300°C or more during the polymerization process, the added amount of the amine forming the cyclic structure.

The terminal capped by a capping agent is a terminal formed when the capping agent is added in the polymerization. Examples of the capping agent include the capping agents described above.

The other terminal is a polymer terminal not classified into any of the terminals. Examples of the other terminal include a terminal produced from the amino terminal through a deammoniation reaction and a terminal produced from the carboxyl terminal through a decarboxylation reaction.

<Characteristics of polyamide (A)>

Sulfuric acid relative viscosity ηr at 25°C can be used as an index of the molecular weight of the polyamide (A). As the sulfuric acid relative viscosity ηr is larger, the molecular weight of the polyamide (A) tends to be higher. As the sulfuric acid relative viscosity ηr is smaller, the molecular weight of the polyamide (A) tends to be lower. The sulfuric acid relative viscosity ηr at 25°C of the polyamide (A) is preferably 1.5 to 7.0, more preferably 1.7 to 6.0, and still more preferably 1.9 to 5.5. When the sulfuric acid relative viscosity ηr is within the range above, the polyamide composition having more excellent mechanical properties, such as toughness and rigidity, and moldability tends to be obtained. The sulfuric acid relative viscosity ηr at 25°C can be measured under a condition of a concentration of 1% in 98% sulfuric acid based on JIS-K6920. More specifically, the sulfuric acid relative viscosity ηr at 25°C can be measured according to the method described in the following Examples.

The polyamide (A) preferably has a melting point Tm2 of 270°C or more, more preferably 275°C or more, and still more preferably 280°C or more. The polyamide (A) preferably has a melting point Tm2 of 350°C or less, more preferably 340°C or less, still more preferably 335°C or less, and yet still more preferably 330°C or less. When the polyamide (A) has a melting point Tm2 of 270°C or more, the heat resistance of the polyamide composition tends to be

further improved. When the polyamide (A) has a melting point Tm2 of 350°C or less, the pyrolysis of the polyamide (A) during melt processing such as extrusion and molding tends to be able to be suppressed. The melting point Tm2 of the polyamide (A) can be measured based on JIS-K7121 according to the method described in Examples to be described later.

The heat of fusion ΔH of the polyamide (A) is preferably 10 J/g or more, more preferably 14 J/g or more, still more preferably 18 J/g or more, and yet still more preferably 20 J/g or more. The upper limit of the heat of fusion ΔH is not particularly limited, and is preferably higher. When the heat of fusion ΔH of the polyamide (A) is 10 J/g or more, the heat resistance of the polyamide composition tends to be further improved. The heat of fusion ΔH of the polyamide (A) can be measured can be measured based on JIS-K7121 according to the method described in Examples to be described later.

The glass transition temperature Tg of the polyamide (A) is preferably 90°C or more, more preferably 110°C or more, still more preferably 120°C or more, yet still more preferably 130°C or more, and most preferably 135°C or more. The glass transition temperature of the polyamide (A) is preferably 170°C or less, more preferably 165°C or less, and still more preferably 160°C or less. When the glass transition temperature of the polyamide (A) is 90°C or more, a polyamide composition having excellent heat discoloration resistance and chemical resistance tends to be able to be obtained. When the glass transition temperature of the polyamide (A) is 170°C or less, the molded product having good appearance tends to be able to be obtained. The glass transition temperature can be measured based on JIS-K7121 as described in Examples to be described later.

[Titanium oxide (B)]

Examples of titanium oxide (B) include, but not particularly limited to, titanium oxide (TiO), dititanium trioxide ($Ti_2O_3$), and titanium dioxide ($TiO_2$). Among these, preferred is titanium dioxide.

The crystal structure of the titanium oxide (B) is not particularly limited, and is preferably a rutile type from the viewpoint of the optical resistance of the polyamide composition.

The number average particle diameter of the titanium oxide (B) is preferably 0.1 to 0.8 μm, more preferably 0.15 to 0.4 μm and, still more preferably 0.15 to 0.3 μm. When the number average particle diameter of the titanium oxide (B) is 0.1 μm or more, the whiteness and extrusion processability of the polyamide composition tend to be further improved. When the number average particle diameter of the titanium oxide (B) is 0.8 μm or less, the whiteness and toughness of the polyamide composition tend to be further improved. The number average particle diameter of the titanium oxide (B) can be measured by electron microscopic photographing. For example, a polyamide composition is placed in an electric furnace to burn the organic substance comprised in the polyamide composition; from the residue, for example, 100 or more titanium oxides are arbitrarily selected, and observed by an electron microscope to measure these particle sizes; thereby, the number average particle diameter of the titanium oxide (B) can be determined.

The titanium oxide (B) can be produced by a so-called sulfuric acid method for hydrolyzing a titanium sulfate solution, or a so-called chlorine method for performing gaseous phase oxidation of halogenated titanium, for example, and the method is not particularly limited.

The titanium oxide (B) preferably has a surface having an inorganic coating layer and/or an organic coating layer formed thereon. Among these, the titanium oxide (B) having a surface having an inorganic coating layer formed thereon and an organic coating layer formed on the inorganic coating layer is preferable. The whiteness, reflow resistance, heat discoloration resistance, and light discoloration resistance of the polyamide composition tend to be further improved by using the titanium oxide (B) having a surface having an inorganic coating layer and/or an organic coating layer formed thereon. This is considered to be because the surface-coated titanium oxide having a photocatalytic action can suppress the deterioration of a resin. However, the reason is not particularly limited thereto. An improvement in whiteness is considered to be caused by an improvement in the dispersion of the titanium oxide by a surface treatment. However, the reason is not particularly limited thereto.

The inorganic coating layer is not particularly limited. However, the inorganic coating layer preferably comprises a metal oxide, for example. The organic coating layer is not particularly limited. However, the organic coating layer preferably comprises one or more organic substances selected from the group consisting of carboxylic acids, polyols, alkanolamines, and organosilicon compounds, for example. Among these, the organic coating layer preferably comprises the polyols and the organosilicon compounds from the viewpoints of the optical resistance and extrusion processability of the polyamide composition. The organic coating layer preferably comprises the organosilicon compounds from the viewpoint of the reduction in gas produced during the processing of the polyamide composition. The coating method for the inorganic coating layer and the organic coating layer is not particularly limited. A known method can be used for the coating method.

The titanium oxide (B) may be used alone, or two or more kinds thereof may be used in combination.

The content of the titanium oxide (B) is 20 to 70 mass%, preferably 25 to 65 mass%, more preferably 30 to 60 mass%, and still more preferably 30 to 50 mass% based on 100 mass% of the polyamide composition. When the content of the titanium oxide (B) is 20 mass% or more, the whiteness of the polyamide composition tends to be further improved.

When the content of the titanium oxide (B) is 70 mass% or less, extrusion processability and toughness tends to be further improved.

[Phosphorus-based compound (C)]

The phosphorus-based compound (C) is a metal hypophosphite, and intramolecular and intermolecular condensates thereof.
The phosphorus-based compound (C) may be used alone, or two or more kinds thereof may be used in combination.
Preferred are metal salts comprising phosphinic acid, and a metal selected from first (alkali metal) and second (alkaline earth metal) groups of the periodic table, manganese, zinc and aluminium, or the intramolecular and intermolecular condensates of the metal salts. More preferred are metal salts comprising phosphinic acid, and a metal selected from first and second groups of the periodic table. Still more preferred are metal salts comprising phosphinic acid, and an alkali earth metal. The polyamide composition having excellent heat discoloration resistance and light discoloration resistance tends to be obtained by using the phosphorus-based compound (C).
Examples of the phosphorus-based compound (C) include, but not particularly limited to, sodium hypophosphite, and calcium hypophosphite; anhydrous salts thereof; and hydrates thereof. Among these, sodium hypophosphite, calcium hypophosphite, and magnesium hypophosphite are preferable; and calcium hypophosphite and magnesium hypophosphite which are alkaline earth metal salts are more preferable. Heat discoloration resistance, light discoloration resistance, and extrusion processability tend to be further improved by using the phosphorus-based compound (C).
The content of the phosphorus-based compound (C) is 0.5 to 7.5 mass%, preferably 1.1 to 7 mass%, and more preferably 1.1 to 4 mass% based on 100 mass% of the polyamide composition. When the content of the phosphorus-based compound (C) is 0.5 mass% or more, heat discoloration resistance and light discoloration resistance tend to be further improved. When the content of the phosphorus-based compound (C) is 7.5 mass% or less, the whiteness and extrusion processability of the polyamide composition tends to be further improved.
A phosphorus element concentration is preferably 1,400 to 20,000 ppm, more preferably 2,000 to 20,000 ppm, and still more preferably 3,000 to 20,000 ppm. When the phosphorus element concentration is 1,400 ppm or more, the polyamide composition tends to have more excellent heat discoloration resistance and light discoloration resistance. When the phosphorus element concentration is 20,000 ppm or less, the polyamide composition tends to have more excellent whiteness and extrusion processability. The phosphorus element concentration can be measured by the method described in Examples.
Furthermore, the ratio of a metal element concentration to the phosphorus element concentration (phosphorus element concentration/metal element concentration) is preferably 0.3 to 0.8, more preferably 0.3 to 0.7, and still more preferably 0.5 to 0.7. When the ratio of the metal element concentration to the phosphorus element concentration is within the range above, the heat discoloration resistance and light discoloration resistance of the polyamide composition tend to be further improved. The ratio can be measured by the ICP emission spectrochemical analysis method, as described in Examples in the same manner as in the method for measuring the phosphorus element concentration.

[Antioxidant (D)]

The polyamide composition of the present embodiment may further comprise an antioxidant (D) such as a phenolic antioxidant (D-1) and/or an amine-based antioxidant (D-2) from the viewpoint of thermal stability.
Examples of the phenolic antioxidant (D-1) include, but not particularly limited to, a hindered phenol compound. The heat resistance and optical resistance of the polyamide composition tend to be further improved by using the phenolic antioxidant (D-1).
Examples of the hindered phenol compound include, but not particularly limited to, N,N'-hexane-1,6-diylbis[3-(3,5-di-t-butyl-4-hydroxyphenylpropionamide), pentaerythrityl-tetrakis[3-(3,5-di-t-butyl-4-hydroxyphenyl)propionate], N,N'-hexamethylenebis(3,5-dit-butyl-4-hydroxy-hydrocinnamamide), triethyleneglycol-bis[3-(3-t-butyl-5-methyl-4-hydroxyphenyl)propionate], 3,9-bis{2-[3-(3-t-butyl-4-hydroxy-5-methylphenyl)propionyloxy]-1,1-dimethylethyl}-2,4,8,10-tetraoxapiro[5,5]undecane, 3,5-di-t-butyl-4-hydroxybenzylphosphonate-diethyl ester, 1,3,5-trimethyl-2,4,6-tris(3,5-di-t-butyl-4-hydroxybenzyl)benzene, and 1,3,5-tris(4-t-butyl-3-hydroxy-2,6-dimethylbenzyl)isocyanurate. Among these, from the viewpoints of improving heat discoloration resistance, the phenolic antioxidant (D-1) is preferably N,N'-hexane-1,6-diylbis[3-(3,5-di-t-butyl-4-hydroxyphenylpropionamide)]. The phenolic antioxidant (D-1) may be used alone, or two or more kinds thereof may be used in combination.
The content of the phenolic antioxidant (D-1) is preferably 0 to 1 mass%, more preferably 0.01 to 1 mass%, and still more preferably 0.1 to 1 mass% based on 100 mass% of the polyamide composition. When the content of the phenolic antioxidant (D-1) is within the range above, the heat discoloration resistance of the polyamide composition tends to be further improved, and the amount of gas to be produced tends to be further reduced.
Examples of the amine-based antioxidant (D-2) include, but not particularly limited to, aromatic amines such

as poly(2,2,4-trimethyl-1,2-dihydroquinoline, 6-ethoxy-1,2-dihydro-2,2,4-trimethylquinoline, phenyl-α-naphthylamine, 4,4-bis(α,α,-dimethylbenzyl)diphenylamine, (p-toluenesulfonylamido)diphenylamine, N,N'-diphenyl-p-phenylenediamine, N,N'-di-β-naphthyl-p-phenylenediamine, N,N'-di(1,4-dimethylpentyl)-p-phenylenediamine, N-phenyl-N'-isopropyl-p-phenylenediamine, N-phenyl-N'-1,3-dimethylbutyl-p-phenylenediamine, and N-(1-methylheptyl)-N'-phenyl-p-phenylenediamine. In the present embodiment, the amine-based antioxidant (D-2) comprises an aromatic amine based compound. The amine-based antioxidant (D-2) may be used alone, or two or more kinds thereof may be used in combination.

The content of the amine-based antioxidant (D-2) is preferably 0 to 1 mass%, more preferably 0.01 to 1 mass%, and still more preferably 0.1 to 1 mass% based on 100 mass% of the polyamide composition. When the content of the amine-based antioxidant (D-2) is within the range above, the heat discoloration resistance of the polyamide composition tends to be further improved, and the amount of gas to be produced tends to be further reduced.

[Metal hydroxide]

The polyamide composition may comprise a metal hydroxide. The metal hydroxide is represented by the general formula $M(OH)_x$ (M represents a metal element and x is the number corresponding to the polyvalence of M). The metal element M is not particularly limited. The metal element M is preferably a monovalent or multivalent metal element, for example. Examples of the metal element M include, but not particularly limited to, sodium, potassium, lithium, calcium, magnesium, barium, zinc, aluminum and strontium. Among these, the metal element is preferably an alkaline earth metal.

Examples of the metal hydroxide include, but not particularly limited to, sodium hydroxide, potassium hydroxide, calcium hydroxide, magnesium hydroxide, aluminium hydroxide, zinc hydroxide, and manganese hydroxide. Among these, from the viewpoints of excellent heat discoloration resistance, extrusion processing stability, and molding processing stability, preferred are calcium hydroxide and magnesium hydroxide, and more preferred is calcium hydroxide. The metal hydroxides may be used alone, or two or more thereof may be used as a mixture.

In order to enhance the adhesion and the dispersibility, surface-treated metal oxides may be used. Examples of the surface treatment agent include, but not particularly limited to, an organosilicon compound such as a silane coupling agent like an aminosilane coupling agent and an epoxysilane coupling agent, and silicone; an organotitanium compound such as a titanium coupling agent; and an organic substance such as an organic acid and a polyol.

[Metal oxide]

The polyamide composition may comprise a metal oxide. The metal oxide is represented by the general formula $MxO_y$ (M represents a metal element and x and y are the numbers satisfying $0 < x \leq 5$, $0 < y \leq 5$, and the polyvalence of $M \times x = 2 \times y$). The metal element M is not particularly limited. The metal element M is preferably a monovalent or multivalent metal element, for example. Examples of the metal element M include, but not particularly limited to, sodium, potassium, lithium, calcium, magnesium, barium, zinc, aluminum and strontium. Among these, the metal element is preferably an alkaline earth metal.

Examples of the metal oxide include, but not particularly limited to, calcium oxide, magnesium oxide, aluminum oxide, zinc oxide, manganese oxide, and tin oxide. Among these, from the viewpoints of excellent heat discoloration resistance, extrusion processing stability, and molding processing stability, preferred are calcium oxide and magnesium oxide. More preferred are calcium oxide. The metal oxide may be used alone, or two or more thereof may be used as a mixture.

These metal oxides may be surface-treated in order to improve adhesion and dispersibility. Example of the surface treatment agent include, but not particularly limited to, an organosilicon compound such as a silane coupling agent like an aminosilane coupling agent and an epoxysilane coupling agent, and silicone; an organotitanium compound such as a titanium coupling agent; and an organic substance such as an organic acid and a polyol.

The metal hydroxide and the metal oxide are preferably particulate. The average particle diameter is preferably 0.05 to 10 μm, and more preferably 0.1 to 5 μm. When the average particle diameter is within the range above, the whiteness, reflow resistance, heat discoloration resistance, and light discoloration resistance of the polyamide composition tend to be further improved.

The mass ratio of particles of 30 μm or more to the total metal hydroxide and metal oxide is preferably 1 mass% or less, and more preferably 0.1 mass% or less. The mass ratio of particles of 30 μm or more to the total metal hydroxide and metal oxide is not particularly limited. The mass ratio is preferably 0 mass%. When the mass ratio of the particles of 30 μm or more is within the range above, the whiteness, reflow resistance, heat discoloration resistance, and light discoloration resistance of the polyamide composition tend to be further improved.

The purities of the metal hydroxide and metal oxide are preferably 99% or more, more preferably 99.5% or more, and still more preferably 99.9% or more. The upper limits of the purities of the metal hydroxide and metal oxide are not particularly limited. However, the upper limits are preferably 100%. When the purities of the metal hydroxide and

metal oxide are within the range above, the whiteness, heat discoloration resistance, and light discoloration resistance of the polyamide composition tend to be further improved.

The contents of the metal hydroxide and metal oxide are preferably 0.1 to 20 mass%, more preferably 0.1 to 10 mass%, and still more preferably 0.3 to 5 mass% based on 100 mass% of the polyamide composition. When the contents of the metal hydroxide and metal oxide are within the range above, the heat discoloration resistance, extrusion processing stability, and molding processing stability of the polyamide composition tend to be further improved.

The polyamide composition may further comprise a metal compound other than the metal oxide and the metal hydroxide from the viewpoints of whiteness and heat discoloration resistance. Examples of the metal compound other than the metal oxide and the metal hydroxide include, but not particularly limited to, a metal carbonate and a metallic halide. The metal element comprised in the metal compound other than the metal oxide and the metal hydroxide is not particularly limited. The metal element is preferably a monovalent or multivalent metal element, for example. Examples of the metal element M include, but not particularly limited to, sodium, potassium, lithium, calcium, magnesium, barium, zinc, aluminum and strontium. The metal element is preferably an alkaline earth metal.

[Inorganic filler]

The polyamide composition may further comprise an inorganic filler other than the titanium oxide from the viewpoints of mechanical properties such as strength and rigidity, appearance, and whiteness. Examples of the inorganic filler include, but not particularly limited to, fibers such as a glass fiber, a carbon fiber, a calcium silicate fiber, a potassium titanate fiber, and an aluminum borate fiber; and non-fibers such as glass flakes, talc, kaolin, mica, hydrotalcite, calcium carbonate, zinc carbonate, zinc oxide, calcium phosphate monobasic, wollastonite, silica, zeolite, alumina, boehmite, aluminum hydroxide, silicon oxide, magnesium oxide, calcium silicate, sodium aluminosilicate, magnesium silicate, Ketchen black, acetylene black, furnace black, carbon nanotubes, graphite, brass, copper, silver, aluminum, nickel, iron, calcium fluoride, montmorillonite, expandable fluorine mica, and apatite. Among these, examples of the inorganic filler include a glass fiber, a potassium titanate fiber, talc, wollastonite, kaolin, mica, calcium carbonate, and clay. Among these, more preferred are wollastonite and calcium carbonate. The inorganic filler may be used alone, or two or more kinds thereof may be used in combination.

From the viewpoints of the whiteness, toughness, and extrusion processability of the polyamide composition, the number average particle diameter of calcium carbonate is preferably 0.1 to 0.8 μm, more preferably 0.15 to 0.4 μm, and still more preferably 0.15 to 0.3 μm.

(Fibers)

The fibers preferably have a number average fiber diameter of 3 to 30 μm, a weight average fiber length of 100 to 750 μm, and an aspect ratio (L/D) of weight average fiber length (L) to number average fiber diameter (D) of 10 to 100 from the viewpoint of enabling the polyamide composition to have excellent mechanical strength properties. Herein, the "number average fiber diameter" may be determined by, for example, placing the polyamide composition in an electric furnace, combusting the organic matter comprised in the polyamide composition, and from the resultant residue, for example, arbitrarily selecting 100 or more glass fibers, observing those selected fibers under a scanning electron microscope (SEM), and measuring the fiber diameters of the glass fiber. The "weight average fiber length" may be determined by measuring the fiber lengths using a SEM photograph at 1,000 times magnification.

The shapes of the fibers such as the glass fiber are not particularly limited. The fibers may have a cross-section which is a true circle or which is flattened. Examples of the flattened cross-section include, but not particularly limited to, a rectangle, an oval shape close to the rectangle, an elliptical shape, and a pod shape having a constricted middle section in the longitudinal direction.

The ellipticities of the fibers are preferably 1.5 or more, more preferably 1.5 to 10.0, still more preferably 2.5 to 10.0, and still more preferably 3.1 to 6.0. When a plate-shaped molded product comprises the fibers whose the ellipticity is within the range above, the plate-shaped molded product tends to reduce the curvature thereof, and have more excellent heat resistance, toughness, low water absorbance, and heat discoloration resistance. The fibers tends to be less likely to be crushed in the case of treatments such as mixing with another component, kneading, and molding, and is likely to exhibit a desired effect. Herein, the "ellipticity" means a ratio represented by D2/D1 when the major axis of a fiber cross section is defined as D2 and the minor axis of the fiber cross section is defined as D1. In the case of the true circle, the ellipticity is set to about 1. The "minor axis D1 of the fiber cross section" and the "major axis D2" may be determined by placing the polyamide composition in an electric furnace, combusting the organic matter comprised in the polyamide composition, and from the resultant residue, for example, arbitrarily selecting 100 or more glass fibers, observing those selected fibers under a scanning electron microscope (SEM), and measuring the minor axis and major axis of the cross section of the glass fiber.

The thicknesses of the fibers whose the ellipticity is 1.5 or more are optional. However, it is preferable that the

minor axis D1 of the fiber cross section is 0.5 to 25 μm, and the major axis D2 of the fiber cross section is 1.25 to 250 μm. When the thicknesses of the fibers are within the range above, the fiber tends to be likely to be spun. The strength of the molded product tends to be further improved by an increase in a contact area with a resin.

The minor axis D1 of the fiber cross section is preferably 3 to 25 μm. Furthermore, it is preferable that the minor axis D1 of the fiber cross section is 3 to 25 μm and the ellipticity of the fiber is a value more than 3. When the thickness of the fiber is within the range above, the fiber tends to be likely to be spun. The strength of the molded product tends to be further improved by an increase in a contact area with a resin.

The fibers whose the ellipticity is 1.5 or more are not particularly limited. The fibers can be produced by methods described in Japanese Patent Publication Nos. 3-59019, 4-13300, and 4-32775. A glass fiber whose the ellipticity is 1.5 or more is particularly preferable. The glass fiber is produced by using an orifice plate having many orifices on a bottom face, wherein the orifice plate which has a convex-shaped edge enclosing a plurality of orifice outlets and extending downward from the bottom face of the orifice plate, or a nozzle tip for irregular shape cross section glass fiber spinning having a plurality of convex-shaped edges extending downward from an outer peripheral part tip of a nozzle tip having a orifice hole or a plurality of orifice holes. In these fibrous inorganic fillers, the fibrous strand may be used as roving as is, or may be further subjected to a cutting step and used as chopped glass strands.

The fibers may be surface treated with a silane coupling agent. The silane coupling agent is not particularly limited. Examples of the fibers include aminosilanes such as γ-aminopropyltriethoxysilane, γ-aminopropyltrimethoxysilane and N-β-(aminoethyl)-γ-aminopropylmethyldimethoxysilane; mercaptosilanes such as γ-mercaptopropyltrimethoxysilane and γ-mercaptopropyltriethoxysilane; epoxy silanes; and vinyl silanes. Among these, the amino silanes are preferred. The silane coupling agent may be used alone, or two or more kinds thereof may be used in combination.

The fibers may further comprises a copolymer comprising a carboxylic acid anhydride group which comprises as constituent units an unsaturated vinyl monomer comprising carboxylic acid anhydride group and an unsaturated vinyl monomer which is different from the unsaturated vinyl monomer comprising carboxylic acid anhydride group, an epoxy compound, a polyurethane resin, an acrylic acid homopolymer, a copolymer of acrylic acid and another copolymerizable monomer, and salts with a primary, secondary, and tertiary amine thereof. These may be used alone, or two or more kinds thereof may be used in combination.

Among these, from the viewpoint of the mechanical strength of the polyamide composition, the copolymer comprising a carboxylic acid anhydride group, the epoxy compound, the polyurethane resin, and a combination thereof are preferable. The copolymer comprising a carboxylic acid anhydride group, the polyurethane resin, and the combination thereof are more preferable.

The fibers can be obtained by adding a known sizing agent to the fibers using a known method such as a roller type applicator during a known step for producing fibers, to produce a fibrous strand, and continuously reacting by drying the fibrous strand. The fibrous strand may be used as roving as is, or may be further subjected to a cutting step and used as chopped glass strands.

The added amount of the sizing agent is preferably 0.2 to 3 mass%, and more preferably 0.3 to 2 mass% as solid content based on 100 mass% of the glass fiber or the carbon fiber. When the added amount of the sizing agent is 0.2 mass% or more, the sizes of the fibers tend to be maintained. On the other hand, when the added amount of the sizing agent is 3 mass% or less, the thermal stability of the polyamide composition tends to be further improved. The drying of the strands may be carried out after the cutting step, or the strands may be dried and then cut.

(Non-fibers)

From the viewpoints of the strength, rigidity, and appearance of the polyamide composition, as an inorganic filler for non-fibers, preferred are wollastonite, kaolin, mica, talc, calcium carbonate, magnesium carbonate, potassium titanate, aluminium borate, and clay; more preferred are wollastonite, kaolin, mica, and talc; still more preferred are wollastonite and mica; and particularly preferred is wollastonite. These inorganic fillers may be used alone, or two or more kinds thereof may be used in combination.

From the viewpoints of the whiteness, toughness and appearance of the polyamide composition, the average particle diameter of the inorganic fillers other than the fibers is preferably 0.01 to 38 μm, more preferably 0.03 to 30 μm, still more preferably 0.05 to 25 μm, yet still more preferably 0.1 to 20 μm, and yet still more preferably 0.15 to 15 μm. When the average particle diameter is 38 μm or less, the polyamide composition tends to have excellent toughness and appearance. When the average particle diameter is 0.01 μm or more, the polyamide composition tends to have more excellent balance of cost, the handling surface of powder, and physical properties. The average particle diameter herein can be measured by SEM, for example.

Regarding an inorganic filler having an acicular shape like wollastonite among the inorganic fillers, a number average fiber diameter is defined as an average particle diameter. When the inorganic filler has a cross section which is not a circle, the maximum value of the length is defined as a fiber diameter.

From the viewpoints of the appearance of a molded product, and wear of metallic parts such as an injection

molding machine, the aspect ratio (L/D) of the weight average fiber length L and number average fiber diameter D of the inorganic filler having an acicular shape is preferably 1.5 to 10, more preferably 2.0 to 5, and still more preferably 2.5 to 4.

An inorganic filler surface-treated by a normal surface treatment agent, for example, a coupling agent such as a silane based coupling agent or a titanate based coupling agent can also be used as the inorganic filler other than the fibers. The silane based coupling agent is not particularly limited. For example, an epoxysilane coupling agent, a mixture of polyalkoxy siloxane and an epoxysilane coupling agent, and a reactant of polyalkoxy siloxane and an epoxysilane coupling agent can be preferably used as the silane based coupling agent. Such a surface treatment agent can be previously added to the surface of the inorganic filler, and can also be added when the polyamide (A) and the inorganic filler are mixed. The amount of the surface treatment agent to be added is 0.05 mass% to 1.5 mass% based on the inorganic filler.

The content of the inorganic filler is preferably 0 to 50 mass%, more preferably 0 to 50 mass%, and still more preferably 5 to 40 mass% based on 100 mass% of the polyamide composition. When the content of the inorganic filler is within the range above, the strength, rigidity, and toughness of the polyamide composition can be kept in better balance.

[Amine based light stabilizer]

The polyamide composition of the present embodiment may further comprise an amine based light stabilizer from the viewpoint of light stability. Examples of the amine based light stabilizer include, but not particularly limited to, 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, bis(1,2,2,6,6-pentamethyl-4-piperidyl)carbonate, bis(1,2,2,6,6-pentamethyl-4-piperidyl)oxalate, bis(1,2,2,6,6-pentamethyl-4-piperidyl)malonate, bis(1,2,2,6,6-pentamethyl-4-piperidyl)sebacate, bis(1,2,2,6,6-pentamethyl-4-piperidyl)adipate, bis(1,2,2,6,6-pentamethyl-4-piperidyl)terephthalate, N,N'-bis-2,2,6,6-tetramethyl-4-piperidinyl-1,3-benzenedicarboxyamide, 1,2-bis(2,2,6,6-tetramethyl-4-piperidyloxy)ethane, α,α'-bis(2,2,6,6-tetramethyl-4-piperidyloxy)-p-xylene, bis(2,2,6,6-tetramethyl-4-piperidyl)-tolylene-2,4-dicarbamate, bis (2,2,6,6-tetramethyl-4-piperidyl)-hexamethylene-1,6-dicarbamate, tris(2,2,6,6-tetramethyl-4-piperidyl)-benzene-1,3,5-tricarboxylate, N,N',N'',N'''-tetrakis(4,6-bis-(butyl-(N-methyl-2,2,6,6-tetramethylpiperidine-4-yl)amino)-triazine-2-yl)-4,7-diazadecane-1,10-diamine, a polycondensate of dibutylamine 1,3,5-triazine N,N'-bis-(2,2,6,6-tetramethyl-4-piperidyl-1,6-hexamethylenediamine-N-(2,2,6,6-tetramethyl-4-piperidyl)butylamine, poly[{6-(1,1,3,3-tetramethylbutyl)amino-1,3,5-trizaine-2,4-diyl}{(2,2,6,6--tetramethyl-4-piperidyl)imino}hexamethylene{(2,2,6,6-tetramethyl-4-piperidyl)imino], tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, tris(2,2,6,6-tetramethyl-4-piperidyl)-benzene-1,3,4-tricarboxylate, 1-[2-{3-(3,5-dit-butyl-4-hydroxyphenyl)propionyloxy}butyl]-4-[3-(3,5-dit-butyl-4-hydroxyphenyl)propionyloxy]2,2,6,6-tetramethylpiperidine, and a condensation product of 1,2,3,4-butanetetracarboxylic acid, 1,2,2,6,6-pentamethyl-4-piperidinol, and β,β,β',β'-tetramethyl-3,9-[2,4,8,10-tetraoxaspiro (5,5)undecane]diethanol.

Among these, as the amine based light stabilizer, preferred are bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, N,N'-bis-2,2,6,6-tetramethyl-4-piperidinyl-1,3-benzenedicarboxyamide, tetrakis(2,2,6,6-tetramethyl-4-piperidyl)-1,2,3,4-butanetetracarboxylate; more preferred are bis(2,2,6,6-tetramethyl-4-piperidyl)sebacate, N,N'-bis-2,2,6,6-tetramethyl-4-piperidinyl-1,3-benzenedicarboxyamide, tetrakis(2,2,6,6-tetramethyl-4-piperidyl)-1,2,3,4-butanetetracarboxylate; and still more preferred is N,N'-bis-2,2,6,6-tetramethyl-4-piperidinyl-1,3-benzenedicarboxyamide. The amine based light stabilizer may be used alone, or two or more kinds thereof may be used in combination.

Examples of the amine based light stabilizer include an N-H type (representing bond of hydrogen to an amino group), an N-R type (representing bond of an alkyl group to an amino group), an NOR type (representing bond of an alkoxy group to an amino group). Among these, the N-H type is preferable from the viewpoint of further improving the light stability of the polyamide composition.

The molecular weight of the amine based light stabilizer is preferably less than 2,000, and more preferably less than 1,000. The amine based light stabilizer is a low molecular type having a molecular weight less than 2,000, which tends to further improve the light stability of the polyamide composition.

The content of the amine based light stabilizer is preferably 0 to 2 mass%, more preferably 0.01 to 2 mass%, and still more preferably 0.1 to 2 mass% based on 100 mass% of the polyamide composition. When the content of the

amine based light stabilizer is within the range above, the light stability and heat discoloration resistance of the polyamide composition can be further improved, and the amount of gas to be produced can be reduced.

[Nucleating agent]

The polyamide composition of the present embodiment may further comprise a nucleating agent from the viewpoint of a release property. In the present embodiment, the "nucleating agent" means a substance raising the crystallization temperature of the copolyamide composition measured by heat differential scanning analysis (DSC) by addition, and providing an effect for miniaturization or size homogenization of the spherulite of the obtained molded product.

Examples of the nucleating agent include, but not particularly limited to, talc, boron nitride, mica, kaolin, calcium carbonate, barium sulfate, silicon nitride, carbon black, potassium titanate, and molybdenum disulfide. Among these, from the viewpoint of a nucleating agent effect, preferred are talc, boron nitride, and carbon black; more preferred are talc and boron nitride; and still more preferred is talc. The nucleating agent may be used alone, or two or more kinds thereof may be used in combination.

The number average particle diameter of the nucleating agent is preferably 0.01 to 10 μm, more preferably 0.5 to 5 μm, and still more preferably 0.5 to 3 μm. When the number average particle diameter of the nucleating agent is within the range above, the nucleating agent effect tends to be further improved. The number average particle diameter of the nucleating agent can obtained dissolving a molded product in a solvent in which polyamide is soluble, such as formic acid, optionally selecting nucleating agents of 100 or more from obtained insoluble component, and observing the nucleating agents with an optical microscope or a scanning electron microscope.

The amount of the nucleating agent to be blended is preferably 0.001 to 5 parts by mass, more preferably 0.001 to 0.5 part by mass, and still more preferably 0.001 to 0.09 part by mass based on 100 mass% of the polyamide. When the amount of the nucleating agent to be blended is 0.001 part by mass or more, the heat resistance of the polyamide composition tends to be further improved. When the amount of the nucleating agent to be blended is 5 parts by mass or less, the toughness of the polyamide composition tends to be further improved.

From the viewpoints of the whiteness, toughness, and extrusion processability of the polyamide composition, the number average particle diameter of calcium carbonate is preferably 0.1 to 0.8 μm, more preferably 0.15 to 0.4 μm, and still more preferably 0.15 to 0.3 μm.

[Processing improving material]

Mold lubricants such as metallic soap, higher aliphatic esters, partial saponification products thereof, a low-molecular weight polyolefin compound, silicone oil, and fluorine based oil can be blended with the polyamide composition in order to improve fabricability. Among these, particularly preferred is low-molecular weight polyethylene having a high mold releasing effect and small corrosivity on a metal.

When polyethylene is used as a low-molecular weight olefin based resin, the number average molecular weight (Mn) of the polyethylene measured with gel permeation chromatography (GPC) is preferably 1000 to 10000, more preferably 2000 to 9000, and still more preferably 3000 to 9000. When Mn of the polyethylene is within the range above, a polyamide composition having excellent whiteness, reflow resistance, strength, and release property tends to be able to be obtained.

[Other components which can be comprised in polyamide composition]

The polyamide composition of the present embodiment may comprise other components as needed other than the components above. Examples of the other components include, but not particularly limited to, a coloring agent such as pigments and dyes (including coloring masterbatches), a flame retardant, a fibrillation agent, a lubricant, a fluorescent brightener, a plasticizer, a copper compound, a halogenated alkali metal compound, an antioxidant, a stabilizer, an ultraviolet absorbing agent, an antistatic agent, a fluidity improver, a filler, a reinforcing agent, a spreading agent, rubbers, a strengthening agent, and other polymers. Herein, because in the other components above, the properties are significantly different from each other, a suitable content of each of the respective components is varied. Persons skilled in the art can easily set the suitable content for each of the other components above.

[Method for producing polyamide composition]

A method for producing the polyamide composition of the present embodiment is not particularly limited. There can be used a method for mixing raw material components comprising the polyamide (A), the titanium oxide (B), and the phosphorus-based compound (C), and the phenolic antioxidant (D-1) and/or the amine-based antioxidant (D-2), the

inorganic filler, and the amine based light stabilizer as needed.

Examples of the method for mixing the polyamide (A) and the titanium oxide (B) include, but not particularly limited to, a method for mixing the polyamide (A) and the titanium oxide (B) using a tumbler or a Henschel mixer, and then feeding the resultant mixture to a melt kneader and kneading, and a method for blending the titanium oxide (B) in the polyamide (A) turned into a melt state by a single-screw or twin-screw extruder from a side feeder.

Examples of the method for mixing the phosphorus-based compound (C) include, but not particularly limited to, a method for mixing the polyamide (A) and the phosphorus-based compound (C) using a tumbler or a Henschel mixer, and then feeding the resultant mixture to a melt kneader and kneading, and a method for blending the phosphorus-based compound (C) in the polyamide (A) turned into a melt state by a single-screw or twin-screw extruder from a side feeder.

Examples of the method for mixing the phenolic antioxidant (D-1) and/or the amine-based antioxidant (D-2) include, but not particularly limited to, a method for mixing the polyamide (A), the phenolic antioxidant (D-1), and/or the amine-based antioxidant (D-2) using a tumbler or a Henschel mixer, and then feeding the resultant mixture to a melt kneader and kneading, and a method for blending the phenolic antioxidant (D-1) and/or the amine-based antioxidant (D-2) in the polyamide (A) turned into a melt state by a single-screw or twin-screw extruder from a side feeder.

The same method can be used also when the inorganic filler is blended. Examples thereof include a method for mixing the polyamide (A) and the inorganic filler, then feeding the resultant mixture to a melt kneader and kneading, and a method for blending the inorganic filler in the polyamide (A) and titanium oxide (B) turned into a melt state by a single-screw or twin-screw extruder from a side feeder.

Examples of the method for mixing the amine based light stabilizer include, but not particularly limited to, a method for mixing the polyamide (A) and the amine based light stabilizer using a tumbler or a Henschel mixer, and then feeding the resultant mixture to a melt kneader and kneading, and a method for blending the phosphorus-based compound (C) in the polyamide (A) turned into a melt state by a single-screw or twin-screw extruder from a side feeder.

The method for feeding the components constituting the polyamide composition to the melt kneader may be carried out by feeding all of the constituent components (polyamide, inorganic filler) all at once to the same feed opening, or by feeding from different feed openings for each constituent component.

The melt kneading temperature is preferably 250 to 375°C at a resin temperature. The melt kneading time is preferably 0.25 to 5 minutes.

The apparatus for performing the melt kneading is not particularly limited. Known apparatuses, for example, a melt kneader such as a single-screw or twin-screw extruder, a Banbury mixer, and a mixing roll may be used.

The sulfuric acid relative viscosity $\eta r$ at 25°C, the melting point Tm2, the heat of fusion $\Delta H$, and the glass transition temperature Tg of the polyamide composition according to the present embodiment can be measured by the same methods as the measurement methods for the polyamide (A). By setting the measurement values for the polyamide composition in the same ranges as the ranges preferred for the measurement values of the polyamide, a polyamide composition having more excellent heat resistance, moldability, and chemical resistance can be obtained.

[Molded product]

The molded product of the present embodiment comprises the polyamide composition described above. The molded product of the present embodiment has excellent reflow resistance, heat discoloration resistance, and light discoloration resistance, and can be preferably used for a reflector.

The molded product of the present embodiment can be obtained by molding the polyamide composition described above according to a known molding method, for example. Examples of the known molding method include, but not particularly limited to, commonly known plastic molding methods such as press molding, injection molding, gas-assisted injection molding, welding molding, extrusion, blow molding, film molding, hollow molding, multilayer molding, and melt spinning.

The molded product of the present embodiment comprises the polyamide composition described above, and thereby the molded product has excellent heat resistance, moldability, mechanical strength, and low water absorbance. Therefore, the polyamide composition described above can be preferably used, for example, as a material for various parts such as in automobile uses, electric and electronic parts, industrial materials, and daily and household articles. The polyamide composition can be preferably used in extrusion applications.

Examples of the automobile uses include, but not particularly limited to, an air intake system component, a cooling system component, a fuel system component, an interior component, an exterior component, and an electrical component.

Examples of the automobile air intake system component include, but not particularly limited to, an air intake manifold, an intercooler inlet, an exhaust pipe cover, an inner bushing, a bearing retainer, an engine mount, an engine head cover, a resonator, and a slot body.

Examples of the automobile cooling system component include, but not particularly limited to, a chain cover,

a thermostat housing, an outlet pipe, a radiator tank, an alternator, and a delivery pipe.

Examples of the automobile fuel system component include, but not particularly limited to, a fuel delivery pipe and a gasoline tank case.

Examples of the automobile interior component include, but not particularly limited to, an instrument panel, a console box, a glove box, a steering wheel, and a trimming.

Examples of the automobile exterior component include, but not particularly limited to a molding, a lamp housing, a front grill, a mud guard, a side bumper, a door mirror stay, and a roof rail.

Examples of the automobile electrical component include, but not particularly limited to, a connector, a wire harness connector, a motor component, a lamp socket, an on-board sensor switch, and a combination switch.

Examples of the electric and electronic parts include, but not particularly limited to, a connector, a switch, a relay, a printed wiring board, an electronic component housing, a power point, a noise filter, a coil bobbin, a reflector for LED, and a motor end cap.

Examples of the parts for the industrial equipments include, but not particularly limited to, a gear, a cam, an insulation block, a valve, a power tool component, an agricultural implement component, and an engine cover.

Examples of the daily and household articles include, but not particularly limited to, a button, a food container, and office equipment.

Examples of the extrusion applications include, but not particularly limited to, a film, a sheet, a filament, a tube, a rod, and a hollow molded product.

## Examples

Hereinafter, the present invention will be more specifically described using the following Examples and Comparative Examples. However, the present invention is not limited to these Examples.

The raw materials and measurement methods used in Examples and Comparative Examples are shown below. In the present Examples, 1 $Kg/cm^2$ means 0.098 MPa.

[Raw materials]

<<Polyamide (A)>>

A polyamide (A) used in the present Examples and Comparative Examples was produced by appropriately using a dicarboxylic acid which constitutes the following dicarboxylic acid unit (a) and a diamine which constitutes a diamine unit (b).

<Dicarboxylic acid which constitutes dicarboxylic acid unit (a)>

(a1) 1,4-Cyclohexanedicarboxylic acid (hereinafter, sometimes referred to as "CHDA") (manufactured by Eastman Chemical Company, trade name: 1,4-CHDA HP Grade (trans/cis (molar ratio)=25/75)
(a2) Terephthalate acid (manufactured by Wako Pure Chemical Industries, Ltd.)

<Diamine which constitutes diamine unit (b)>

(b1) 2-methylpentamethylenediamine (hereinafter, sometimes referred to as "2MC5DA") (manufactured by Tokyo Chemical Industry Co., Ltd.)
(b2) 1,9-nonamethylenediamine (hereinafter, sometimes referred to as "C9DA") (manufactured by Aldrich)
(b3) 2-methyloctamethylenediamine (hereinafter, sometimes referred to as "2MC9DA") (produced by reference to a process described in Japanese Patent Laid-Open No. 05-17413)
(b4) 1,10-diaminodecane (hereinafter, sometimes referred to as "C10DA") (manufactured by Tokyo Chemical Industry Co., Ltd.)
(b5) 1,6-hexamethylenediamine (manufactured by Tokyo Chemical Industry Co., Ltd.)

<<Titanium oxide (B)>>

(B1) $TiO_2$ (manufactured by ISHIHARA SANGYO KAISHA, Ltd.; TIPAQUE (registered trademark) CR-63,

number average particle diameter: 0.21 μm, coating: alumina, silica, and siloxane compound)
In the present Examples, the number average particle diameter of the titanium oxide (B) was measured as follows by electron microscopic photographing. A polyamide composition was placed in an electric furnace to burn the organic substance comprised in the polyamide composition. From the residue, 100 or more titanium oxides were optionally selected, and observed by an electron microscope to measure these particle sizes. Thereby, the number average particle diameter of the titanium oxide (B) was determined.

<<Phosphorus-based compound (C)>>

(C1) sodium hypophosphite monohydrate (manufactured by Wako Pure Chemical Industries, Ltd., decomposition initial temperature of 300°C)
(C2) magnesium hypophosphite hexahydrate (manufactured by Wako Pure Chemical Industries, Ltd., decomposition initial temperature of 340°C)
(C3) calcium hypophosphite (manufactured by Wako Pure Chemical Industries, Ltd., decomposition initial temperature of 340°C)

<<Antioxidant (D)>>

(D1) phenolic antioxidant (manufactured by BASF AG, trade name: IRGANOX (registered trademark) 1098)

<<Inorganic filler>>

Wollastonite (manufactured by NYCO, number average fiber diameter of 8 μm)

[Calculation of mol% of alicyclic dicarboxylic acid unit (a-1)]

The mol% of the alicyclic dicarboxylic acid unit (a-1) was determined by calculation using the following formula.
Formula: mol% of the alicyclic dicarboxylic acid unit (a-1) = (number of moles of the alicyclic dicarboxylic acid added as a raw material monomer/number of moles of all the dicarboxylic acid added as a raw material monomer) × 100.

[Calculation of mol% of aromatic dicarboxylic acid unit (a-2)]

The mol% of the aromatic dicarboxylic acid unit (a-2) was determined by calculation using the following formula.

Formula: aromatic dicarboxylic acid unit (a-2) = (number of moles of the aromatic dicarboxylic acid added as a raw material monomer/number of moles of all the dicarboxylic acid added as a raw material monomer) × 100.

[Measurement methods]

(1) Melting point Tm2 (°C), heat of fusion ΔH (J/g)

The melting point Tm2 (°C) and heat of fusion ΔH (J/g) of the polyamide (A) were measured using the Diamond-DSC, manufactured by PERKIN-ELMER Inc., based on JIS-K7121. Specifically, measurement was carried out as follows. First, under a nitrogen atmosphere, the temperature of a sample of about 10 mg was increased to 300 to 350°C depending on the melting point of the sample at a rate of temperature increase of 20°C /min. The temperature of the endothermic peak (melting peak) which appeared at this time was taken as Tm1 (°C). Subsequently, the temperature was maintained at the maximum temperature in temperature increase for 2 minutes. The polyamide was in a melt state at the maximum temperature. The temperature was then lowered to 30°C at a rate of temperature decrease of 20°C/min, and maintained at 30°C for 2 minutes. Then, the temperature was increased to 300 to 350°C depending on the melting point of the sample from 30°C at a rate of temperature increase of 20°C/min. The maximum peak temperature of the endothermic

peak (melting peak) which appeared at this time was taken as Tm2 (°C). The total peak area was taken as the heat of fusion ΔH (J/g). When there were a plurality of peaks, peaks having a ΔH of 1 J/g or more were determined to be peaks. The endothermic peak temperature having the maximum ΔH was taken as a melting point of Tm2 (°C). When there were two peaks as Tm2, for example, one at an endothermic peak temperature of 295°C (ΔH = 20 J/g), and another one at an endothermic peak temperature of 325°C (ΔH = 25 J/g), the melting point Tm2 was set to be 325°C, and ΔH = 25 J/g was set.

(2) Trans isomer ratio

The trans isomer ratio of the alicyclic dicarboxylic acid unit (a-1) in the polyamide (A) was measured as follows. 30 to 40 mg of the polyamide (A) was dissolved in 1.2 g of deuterated hexafluoroisopropanol. The trans isomer ratio was measured by 1H-NMR by using the obtained solution. In the case of 1,4-cyclohexanedicarboxylic acid (a1), the trans isomer ratio was determined from the ratio of the peak area of 1.98 ppm derived from the trans isomer to the peak areas of 1.77 ppm and 1.86 ppm derived from the cis isomer.

(3) Glass transition temperature Tg (°C)

The glass transition temperature (°C) of the polyamide (A) was measured using the Diamond-DSC, manufactured by PERKIN-ELMER Inc., based on JIS-K7121. Specifically, measurement was carried out as follows. A molten sample obtained by melting a sample with a hot stage (EP80 manufactured by Mettler) was rapidly cooled by using liquid nitrogen, and solidified for use as a measurement sample. The temperature of 10 mg of the measurement sample was increased to a range of 30 to 350°C under a condition of a rate of temperature increase of 20°C/min by the DSC, and the glass transition temperature Tg (°C) observed when the temperature was increased was measured.

(4) Sulfuric acid relative viscosity at 25°C ηr

The sulfuric acid relative viscosity ηr at 25°C of the polyamide (A) was measured based on JIS-K6810. Specifically, using 98% sulfuric acid, a dissolved solution in a concentration of 1% (proportion of (1 g of polyamide (A))/(100 mL of 98% sulfuric acid)) was prepared. The sulfuric acid relative viscosity ηr was measured under a condition of 25°C by using the obtained dissolved solution.

(5) Phosphorus element concentration, and ratio of metal concentration/phosphorus element concentration

The phosphorus element concentration and the metal concentration were measured by an ICP emission spectrochemical analysis method. ICPS-8100 manufactured by Shimadzu Corporation was used as a measuring apparatus. The ratio of metal concentration/phosphorus element concentration was calculated from the measured values of the phosphorus element concentration and the metal concentration.

(6) Method for analyzing phosphorus-based compound

Measurement was carried out according to XRD. X'Pert PRO MPD manufactured by PANalytical was used as a measuring apparatus. X'Celerator was used as a detector. The compound was identified from the diffraction pattern of the phosphorus-based compound as a simple substance. The content was calculated from the peak area of X-ray diffraction.

(7) Initial reflectivity (%)

A molded piece having a length of 60 mm, a width of 60 mm, and a thickness of 1.0 mm was produced by molding the polyamide composition pellets obtained in Examples and Comparative Examples using an injection molding machine [PS-40E: manufactured by Nissei Plastic Industrial Co., Ltd.]. In the molding, an injection + pressure holding time was set to 10 seconds; a cooling time was set to 15 seconds; a die temperature was set to 120°C; and a melting resin temperature was set to a melting point Tm2+10°C of the polyamide (A). The obtained molded piece was irradiated with light having a wavelength of 450 nm. The reflectivity of the light was measured with a Hitachi spectrophotometer (U-3310) to obtain the initial reflectivity.

(8) Reflective retention rate after reflow process (%)

A molded piece having a length of 60 mm, a width of 60 mm, and a thickness of 1.0 mm was produced by

molding the polyamide composition pellets obtained in Examples and Comparative Examples using the injection molding machine [PS-40E: manufactured by Nissei Plastic Industrial Co., Ltd.]. In the molding, an injection + pressure holding time was set to 10 seconds; a cooling time was set to 15 seconds; a die temperature was set to 120°C; and a melting resin temperature was set to a melting point Tm2+20°C of the polyamide (A). The obtained molded piece was heat-treated three times in a hot blast reflow furnace (280°C × 10 seconds) (reflow process). The molded piece before and after the treatment (reflow process) was irradiated with light having a wavelength of 450 nm. The reflectivity of the light was measured with the Hitachi spectrophotometer (U-3310) to obtain the reflective retention rate.

(9) Reflective retention rate after heat treatment (%)

The molded piece after the reflow process obtained by the measurement of the reflective retention rate (%) after the reflow process was heat-treated at 150°C in a hot-air drier for 72 hours. The molded piece before and after the heat treatment was irradiated with light having a wavelength of 450 nm. The reflectivity of the light was measured with the Hitachi spectrophotometer (U-3310) to obtain the reflective retention rate.

(10) Reflective retention rate in metal halide exposure test (%)

The molded piece after the heat treatment obtained by the measurement of the reflective retention rate (%) after the heat treatment was subjected to a metal halide exposure treatment in a metal halide lamp type light resistance testing machine (manufactured by Iwasaki Electric Co., Ltd.) at 100°C for 700 hours. An illuminance at a position where the molded piece was set was 10 mW/$cm^2$. The molded piece before and after the metal halide exposure treatment was irradiated with light having a wavelength of 450 nm. The reflectivity of the light was measured with the Hitachi spectrophotometer (U-3310) to obtain the reflective retention rate.

(11) Extrusion processability

The polyamide composition pellets obtained in Examples and Comparative Examples were extruded by a twin-screw extruder having a screw diameter of 40 mm. In the extrusion, a cylinder temperature was set to Tm2+20°C of the polyamide (A); a screw revolution speed was set to 180 rpm; and a discharge rate was set to 100 kg/h. The number of strand breakages generated for 20 minutes after the extrusion start was measured. As the number of the strand breakages was less, excellent extrusion processability was determined to be excellent.

<<Production of polyamide (A)>>

[Production example 1]

896 g (5.20 mol) of 1,4-cyclohexanedicarboxylic acid (CHDA) and 604 g (5.20 mol) of 2-methylpentamethylenediamine (2MC5DA) were dissolved in 1,500 g of distilled water to prepare an equimolar about 50 mass% aqueous mixed solution of the raw material monomers. The obtained aqueous mixed solution and 21 g of 2MC5DA (0.18 mol) as the additives added during melt polymerization were charged into an autoclave having an internal volume of 5.4 L (manufactured by Nitto Kouatsu Co., Ltd.). Subsequently, the autoclave was kept warm until the solution temperature (internal temperature) in the autoclave was 50°C. Then, the atmosphere of the autoclave was replaced by nitrogen. Heating was continued until the pressure in the autoclave tank (hereinafter, merely, sometimes referred to as "in the tank") was, in terms of gauge pressure (hereinafter, pressure in the tank is always expressed as gauge pressure), about 2.5 kg/$cm^2$ (at this time, the solution temperature was about 145°C). While removing water from the system to maintain the pressure in the tank at about 2.5 kg/$cm^2$, heating was continued so that the solute concentration of the aqueous solution in the tank was concentrated to about 85 mass%. Removal of water was stopped, and then heating was continued until the pressure in the tank was about 30 kg/$cm^2$. Then, while removing water from the system to maintain the pressure in the tank at about 30 kg/$cm^2$, heating was continued until the temperature was lower (about 295°C) by 50°C than the final temperature (about 345°C). While continuing heating, the pressure in the tank was lowered over 60 minutes from 30 kg/$cm^2$ to atmospheric pressure (gauge pressure of 0 kg/$cm^2$). The heater temperature was adjusted so that the final temperature of the resin temperature (solution temperature) in the tank during pressure lowering was about 345°C. The tank contents were kept for 10 minutes under a reduced pressure of 100 Torr by a vacuum apparatus while the resin temperature in the tank was maintained. Then, the pressure in the tank was increased with nitrogen, and the product was formed into a strand, and discharged from a lower spinneret (nozzle). Furthermore, the strand-like product was water cooled and cut to obtain a pellet-like polyamide (A)

(polyamide pellet).

10 kg of the polyamide pellets obtained by using the melt polymerization was charged into a conical ribbon vacuum dryer (trade name: Ribocone RM-10V, manufactured by Okawara Corporation), and the atmosphere of the vacuum dryer was thoroughly replaced by nitrogen. Under a 1 L/minute nitrogen flow in the vacuum dryer, the polyamide pellets were heated at 260°C for 6 hours while stirring. Then, while continuing to flow with nitrogen, the temperature in the vacuum dryer was decreased to about 50°C. The polyamide pellets were removed as is from the vacuum dryer to obtain a polyamide (hereinafter, sometimes referred to as "PA-1").

The moisture percentage was adjusted to be less than about 0.2 mass% by drying the obtained polyamide under a nitrogen flow, and the characteristics of the polyamide were then measured based on the measuring methods. As the result of the measurements, the polyamide (PA-1) had a melting point Tm2 of 327°C, heat of fusion ΔH of 35 J/g, a glass transition temperature Tg of 150°C, a trans isomer ratio of 71%, and sulfuric acid relative viscosity at 25°C of 3.1.

[Production example 2]

782 g (4.54 mol) of CHDA, 575 g (3.63 mol) of 1,9-nonamethylenediamine (C9DA), and 144 g (0.91 mol) of 2-methyloctamethylenediamine (2MC9DA) were dissolved in 1,500 g of distilled water to prepare an equimolar about 50 mass% aqueous mixed solution of the raw material monomers. The obtained aqueous mixed solution and 11 g of C9DA (0.07 mol) as the additives added during melt polymerization were charged into an autoclave having an internal volume of 5.4 L (manufactured by Nitto Kouatsu Co., Ltd.). Subsequently, the autoclave was kept warm until the solution temperature (internal temperature) in the autoclave was 50°C. Then, the atmosphere of the autoclave was replaced by nitrogen. Heating was continued until the pressure in the autoclave tank was, in terms of gauge pressure, about 2.5 kg/cm$^2$ (at this time, the solution temperature was about 145°C). While removing water from the system to maintain the pressure in the tank at about 2.5 kg/cm$^2$, heating was continued so that the solute concentration of the aqueous solution in the tank was concentrated to about 75 mass%. Removal of water was stopped, and then heating was continued until the pressure in the tank was about 30 kg/cm$^2$. Then, while removing water from the system to maintain the pressure in the tank at about 30 kg/cm$^2$, heating was continued until the temperature was lower (about 290°C) by 50°C than the final temperature (about 340°C). While continuing heating, the pressure in the tank was lowered over 90 minutes from 30 kg/cm$^2$ to atmospheric pressure (gauge pressure of 0 kg/cm$^2$). The heater temperature was adjusted so that the final temperature of the resin temperature (solution temperature) in the tank during pressure lowering was about 340°C. The tank contents were kept for 30 minutes under a reduced pressure of 400 Torr by a vacuum apparatus while the resin temperature in the tank was maintained. Then, the pressure in the tank was increased with nitrogen, and the product was formed into a strand, and discharged from a lower spinneret (nozzle). Furthermore, the strand-like product was water cooled and cut to obtain a pellet-like polyamide (A) (hereafter, sometimes referred to as "PA-2").

The moisture percentage was adjusted to be less than about 0.2 mass% by drying the obtained polyamide under a nitrogen flow, and the characteristics of the polyamide were then measured based on the measuring methods. As the result of the measurements, the polyamide (PA-2) had a melting point Tm2 of 316°C, heat of fusion ΔH of 26 J/g, a glass transition temperature Tg of 119°C, a trans isomer ratio of 70%, and sulfuric acid relative viscosity at 25°C of 2.4.

[Production example 3]

Polymerization was carried out in the same manner as in the method described in the production example 1 to obtain a polyamide (hereinafter, sometimes referred to as "PA-3") except that 750 g (4.35 mol) of 1,4-cyclohexanedicarboxylic acid (CHDA) was used as a raw material dicarboxylic acid; 750 g (4.35 mol) of 1,10-diaminodecane (C10DA) was used as a raw material diamine; 15 g of C10DA (0.09 mol) was used as the additives during melt polymerization; and the final temperature of a resin temperature (solution temperature) was 355°C. The moisture percentage was adjusted to be less than about 0.2 mass% by drying the obtained polyamide under a nitrogen flow, and the characteristics of the polyamide were then measured based on the measuring methods. As the result of the measurements, the polyamide (PA-3) had a melting point Tm2 of 334°C, heat of fusion ΔH of 35 J/g, a glass transition temperature Tg of 121°C, a trans isomer ratio of 70%, and sulfuric acid relative viscosity at 25°C of 2.3.

[Production example 4]

A polyamide 9T (hereinafter, sometimes referred to as "PA-4") was manufactured according to the method described in Example 1 of Japanese Patent Laid-Open No. 7-228689. In such case, terephthalic acid (a2) was used as a dicarboxylic acid which constitutes a dicarboxylic acid unit (a). 1,9-nonamethylenediamine (C9DA) and 2-methyloctamethylenediamine (2MC9DA) [C9DA:2MC9DA = 80:20 (molar ratio)] were used as a diamine which constitutes a diamine unit (b).

Specifically, the dicarboxylic acid and the diamine were put into an autoclave with an internal volume of 20 L, and the atmosphere thereof was replaced by nitrogen. The raw materials were stirred for 30 minutes at 100°C, and the internal temperature of the autoclave was increased to 200°C over 2 hours. During temperature rising, the pressure in the autoclave was increased to 22 kg/cm$^2$. The reaction was continued for 1 hour while the temperature and the pressure in the autoclave were maintained. Thereafter, the internal temperature was increased to 230°C. Thereafter, the internal temperature was maintained at 230°C for 2 hours, and the mixture was reacted while water vapor was extracted gradually and the pressure was maintained at 22 kg/cm$^2$. Subsequently, the pressure was lowered to 10 kg/cm$^2$ over 30 minutes, and the mixture was then reacted for 1 hour to obtain a prepolymer. The prepolymer was dried at 100°C under reduced pressure for 12 hours. The obtained dried body was crushed into the size of 2 mm or less. The resultant was subjected to solid-phase polymerization under the conditions of 230°C and 0.1 mmHg for 10 hours to obtain a polyamide 9T (PA-4). The characteristics of the polyamide were measured based on the measuring methods. As the result of the measurements, the polyamide had a melting point Tm2 of 298°C, heat of fusion ΔH of 35 J/g, a glass transition temperature Tg of 122°C, and sulfuric acid relative viscosity at 25°C of 2.6.

[Production example 5]

A polyamide 10T (hereinafter, sometimes referred to as "PA-5") was obtained in the same manner as in the production example 1 except that terephthalic acid was used as a dicarboxylic acid unit which constitutes a dicarboxylic acid unit (a), and 1,10-diaminodecane (C10DA) was used as a diamine which constitutes a diamine unit (b). The characteristics of the polyamide were measured based on the measuring methods. As the result of the measurements, the polyamide had a melting point Tm2 of 315°C, heat of fusion ΔH of 43 J/g, a glass transition temperature Tg of 116°C, and sulfuric acid relative viscosity at 25°C of 2.0.

[Production example 6]

A polyamide 6T (hereinafter, sometimes referred to as "PA-6") was obtained in the same manner as in the production example 1 except that a terephthalic acid unit was used as a dicarboxylic acid unit which constitutes a dicarboxylic acid unit (a), and 1,6-hexamethylenediamine and 2-methylpentamethylenediamine (2MC5DA) [1,6-hexamethylenediamine:2MC5DA = 60:40 (molar ratio)] were used as a diamine which constitutes a diamine unit (b). The characteristics of the polyamide were measured based on the measuring methods. As the result of the measurements, the polyamide had a melting point Tm2 of 305°C, heat of fusion ΔH of 17 J/g, a glass transition temperature Tg of 135°C, and sulfuric acid relative viscosity at 25°C of 2.1.

<<Production of polyamide composition>>

[Examples 1 to 26 and Comparative Examples 1 to 8]

The polyamide (A) obtained in the production examples 1 to 6 and the raw materials of the titanium oxide (B), the phosphorus-based compound (C), the antioxidant (D), and the inorganic filler were used in kinds and ratios described in Tables 1 and 2 to produce polyamide compositions as follows. The polyamides obtained in the production examples 2 to 4 were dried under a nitrogen flow to adjust the moisture percentage to about 0.2 mass%. The adjusted polyamides were used as raw materials for polyamide compositions.

A twin-screw extruder [ZSK-40MC: Coperion GmbH (Germany)] was used as a producing apparatus of the polyamide composition. The twin-screw extruder included an upstream feeding port in a first barrel upstream of the extruder, a downstream first feeding port in a sixth barrel, and a downstream second feeding port in a ninth barrel. In the twin-screw extruder, the L/D (length of the cylinder in the extruder/diameter of the cylinder in the extruder) = 48, and the number of barrels was 13. In the twin-screw extruder, a zone from the upstream feeding port to a die was set at the melting point Tm2+20°C of each of the polyamides (A) produced in the production examples at a screw revolution speed of 180 rpm and a discharge rate of 100 kg/h.

The polyamide (A), the phosphorus-based compound (C), and the (D) phenolic antioxidant were dry blended in kinds and ratios described in Table 1. The dry blended composition was fed from the upstream feeding port of the twin-screw extruder. Subsequently, the titanium oxide (B) was fed in kinds and ratios described in Table 1 from the downstream first feeding port of the twin-screw extruder. Furthermore, the inorganic filler was fed in kinds and ratios described in Table 1 from the downstream second feeding port of the twin-screw extruder. The raw materials fed as described above were melt kneaded in the twin-screw extruder to produce polyamide composition pellets. The obtained polyamide composition pellets were dried in a nitrogen stream to reduce a moisture amount in the polyamide composition to 500 ppm or less. A variety of evaluations were performed as described above by using the polyamide composition after the moisture amount was adjusted. The evaluation results are shown in Tables 1 and 2.

[Table 1]

| | kind | unit | Examples | | | | | | | | | | | | | Comparative Examples | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 1 | 2 | 3 | 4 |
| polyamide (A) | PA-1 | mass% | 49.3 | 48.8 | 48.3 | - | - | 44.8 | 38.3 | 48.8 | 43.8 | 49.1 | 45.8 | 58.3 | 44.8 | 39.8 | 49.5 | 41.8 | 68.3 |
| | PA-2 | mass% | - | - | - | 48.3 | - | - | - | - | - | - | - | - | - | - | - | - | - |
| | PA-3 | mass% | - | - | - | - | 48.3 | - | - | - | - | - | - | - | - | - | - | - | - |
| titanium oxide (B) | B-1 | mass% | 30 | 30 | 30 | 30 | 30 | 30 | 40 | 30 | 30 | 30 | 30 | 20 | 50 | 30 | 30 | 30 | 10 |
| phosphorus-based compound (C) | C-1 | mass% | 0.5 | 1.0 | 1.5 | 1.5 | 1.5 | 5.0 | 1.5 | - | - | - | - | 1.5 | 5.0 | 0.05 | 0.3 | 8.0 | 1.5 |
| | C-2 | mass% | - | - | - | - | - | - | - | 1.0 | 6.0 | - | - | - | - | - | - | - | - |
| | C-3 | mass% | - | - | - | - | - | - | - | - | - | 0.7 | 4.0 | - | - | - | - | - | - |
| antioxidant (D) | D-1 | mass% | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| inorganic filler | | mass% | 20 | 20 | 20 | 20 | 20 | 20 | 20 | 20 | 20 | 20 | 20 | 20 | - | 30 | 20 | 20 | 20 |
| phosphorus element concentration comprised in polyamide composition | | ppm | 1462 | 2925 | 4387 | 4387 | 4387 | 14624 | 4387 | 2363 | 14178 | 2552 | 14584 | 4387 | 14624 | 146 | 877 | 23398 | 4387 |
| metal concentration/ phosphorus element concentration derived from phosphorus-based compound | | - | 0.74 | 0.74 | 0.74 | 0.74 | 0.74 | 0.74 | 0.74 | 0.39 | 0.39 | 0.65 | 0.65 | 0.74 | 0.74 | 0.74 | 0.74 | 0.74 | 0.74 |
| initial reflectivity | | % | 96.2 | 95.5 | 94.1 | 93.5 | 94.0 | 92.5 | 92.7 | 95.9 | 95.3 | 96.8 | 96.5 | 95.0 | 92.6 | 96.0 | 96.0 | 91.2 | 90.3 |
| reflective retention rate after reflow process | | % | 84 | 86 | 89 | 89 | 89 | 90 | 90 | 87 | 91 | 88 | 92 | 84 | 93 | 75 | 76 | 88 | 78 |
| reflective retention rate after heat treatment | | % | 70 | 72 | 76 | 76 | 76 | 76 | 80 | 73 | 79 | 75 | 80 | 70 | 76 | 65 | 66 | 72 | 66 |
| reflective retention rate after metal halide exposure test | | % | 98 | 100 | 100 | 100 | 100 | 100 | 100 | 100 | 100 | 100 | 100 | 97 | 100 | 93 | 94 | 100 | 94 |

(continued)

| | kind | unit | Examples | | | | | | | | | | | | | Comparative Examples | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 1 | 2 | 3 | 4 |
| extrusion processability | | number of times | 5 | 6 | 6 | 6 | 6 | 8 | 6 | 1 | 2 | 0 | 1 | 0 | 8 | 0 | 0 | 13 | 4 |

[Table 2]

| | kind | unit | Examples | | | | | | | | | | | | | Comparative Examples | | | |
|---|---|---|---|---|---|---|---|---|---|---|---|---|---|---|---|---|---|---|---|
| | | | 14 | 15 | 16 | 17 | 18 | 19 | 20 | 21 | 22 | 23 | 24 | 25 | 26 | 5 | 6 | 7 | 8 |
| polyamide (A) | PA-4 | mass% | 49.3 | 48.8 | 48.3 | - | - | 44.8 | 38.3 | 48.8 | 43.8 | 49.1 | 45.8 | 58.3 | 44.8 | 39.7 | 49.5 | 41.8 | 68.3 |
| | PA-5 | mass% | - | - | - | 48.3 | - | - | - | - | - | - | - | - | - | - | - | - | - |
| | PA-6 | mass% | - | - | - | - | 48.3 | - | - | - | - | - | - | - | - | - | - | - | - |
| titanium oxide (B) | B-1 | mass% | 30 | 30 | 30 | 30 | 30 | 30 | 40 | 30 | 30 | 30 | 30 | 20 | 50 | 30 | 30 | 30 | 10 |
| phosphorus-based compound (C) | C-1 | mass% | 0.5 | 1.0 | 1.5 | 1.5 | 1.5 | 5.0 | 1.5 | - | - | - | - | 1.5 | 5.0 | 0.05 | 0.3 | 8.0 | 1.5 |
| | C-2 | mass% | - | - | - | - | - | - | - | 1.0 | 6.0 | - | - | - | - | - | - | - | - |
| | C-3 | mass% | - | - | - | - | - | - | - | - | - | 0.7 | 4.0 | - | - | - | - | - | - |
| antioxidant (D) | D-1 | mass% | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| inorganic filler | | mass% | 20 | 20 | 20 | 20 | 20 | 20 | 20 | 20 | 20 | 20 | 20 | 20 | - | 30 | 20 | 20 | 20 |
| phosphorus element concentration comprised in polyamide composition | | ppm | 1462 | 2925 | 4387 | 4387 | 4387 | 14624 | 4387 | 2363 | 14178 | 2552 | 14584 | 4387 | 14624 | 146 | 877 | 23398 | 4387 |
| metal concentration/ phosphorus element concentration derived from phosphorus-based compound | | - | 0.74 | 0.74 | 0.74 | 0.74 | 0.74 | 0.74 | 0.74 | 0.39 | 0.39 | 0.65 | 0.65 | 0.74 | 0.74 | 0.74 | 0.74 | 0.74 | 0.74 |
| initial reflectivity | | % | 93.5 | 93.3 | 93.5 | 93.4 | 93.4 | 93.3 | 93.8 | 93.8 | 93.7 | 93.5 | 93.5 | 92.2 | 93.3 | 93.0 | 93.2 | 94.0 | 87.3 |
| reflective retention rate after reflow process | | % | 65 | 67 | 70 | 72 | 69 | 71 | 72 | 69 | 73 | 70 | 73 | 65 | 71 | 55 | 56 | 69 | 58 |
| reflective retention rate after heat treatment | | % | 66 | 68 | 72 | 73 | 71 | 72 | 72 | 69 | 75 | 71 | 76 | 66 | 75 | 61 | 62 | 68 | 62 |
| reflective retention rate after metal halide exposure test | | % | 90 | 91 | 92 | 92 | 92 | 94 | 94 | 94 | 94 | 92 | 92 | 89 | 94 | 87 | 88 | 92 | 88 |

(continued)

| | kind | unit | Examples | | | | | | | | | | | | | Comparative Examples | | | |
|---|---|---|---|---|---|---|---|---|---|---|---|---|---|---|---|---|---|---|---|
| | | | 14 | 15 | 16 | 17 | 18 | 19 | 20 | 21 | 22 | 23 | 24 | 25 | 26 | 5 | 6 | 7 | 8 |
| extrusion processability | | number of times | 4 | 7 | 7 | 7 | 7 | 9 | 7 | 1 | 4 | 2 | 1 | 0 | 9 | 0 | 4 | 14 | 4 |

The results of Examples 1 to 13 and Comparative Examples 1 to 4 of Table 1, and Examples 14 to 26 and Comparative Examples 5 to 8 of Table 2 showed that the polyamide composition of the present invention had excellent initial reflectivity, reflective retention rate after the heat treatment (after the reflow process, after the heat treatment), and reflective retention rate in metal halide exposure. The above results showed that the polyamide composition of the present invention had excellent reflective retention rates, and could be preferably used for the reflector for LED.
The polyamide composition of Example comprising the titanium oxide capable of also serving as a white pigment was found to have high initial reflectivity and high whiteness.

Industrial Applicability

The polyamide composition of the present invention has industrial applicability as a material for various parts, such as in automobiles, electric and electronics, industrial materials, and daily and household articles.

## Claims

1. A polyamide composition comprising:

   a polyamide (A) comprising a dicarboxylic acid unit (a) and a diamine unit (b);
   20 to 70 mass% of titanium oxide (B); and
   0.5 to 7.5 mass% of a phosphorus-based compound (C), wherein the phosphorus-based compound (C) is a metal hypophosphite.

2. The polyamide composition according to claim 1, wherein the dicarboxylic acid unit (a) comprises 50 mol% or more of an alicyclic dicarboxylic acid unit (a-1).

3. The polyamide composition according to claim 1, wherein the dicarboxylic acid unit (a) comprises more than 50 mol% of an aromatic dicarboxylic acid unit (a-2).

4. The polyamide composition according to any one of claims 1 to 3, wherein a phosphorus element concentration is 1,400 to 20,000 ppm.

5. The polyamide composition according to any one of claims 1 to 4, wherein a content of the titanium oxide (B) is 30 to 65 mass%.

6. The polyamide composition according to any one of claims 1 to 5, wherein the polyamide (A) has a melting point of 270 to 350°C.

7. The polyamide composition according to any one of claims 1 to 6, wherein the alicyclic dicarboxylic acid unit (a-1) comprises a unit derived from 1,4-cyclohexanedicarboxylic acid.

8. The polyamide composition according to any one of claims 1 to 7, wherein the phosphorus-based compound (C) comprises an alkaline earth metal salt.

9. The polyamide composition according to any one of claims 1 to 8, wherein a ratio of the metal element concentration to the phosphorus element concentration is 0.3 to 0.8, wherein the ratio is measured using ICP emission spectrochemical analysis.

10. The polyamide composition according to any one of claims 1 to 9, further comprising an antioxidant (D), wherein the antioxidant (D) comprises a phenolic antioxidant (D-1) and/or an amine-based antioxidant (D-2).

11. A reflector comprising the polyamide composition according to any one of claims 1 to 10.

## Patentansprüche

1. Polyamidzusammensetzung, umfassend:

ein Polyamid (A), das eine Dicarbonsäure-Einheit (a) und eine Diamin-Einheit (b) umfasst;
20 bis 70 Massen-% Titanoxid (B); und
0,5 bis 7,5 Massen-% einer phosphorbasierten Verbindung (C), wobei es sich bei der phosphorbasierten Verbindung (C) um ein Metallhypophosphit handelt.

2. Polyamidzusammensetzung nach Anspruch 1, wobei die Dicarbonsäure-Einheit (a) 50 Mol-% oder mehr einer alicyclische Dicarbonsäure-Einheit (a-1) umfasst.

3. Polyamidzusammensetzung nach Anspruch 1, wobei die Dicarbonsäure-Einheit (a) mehr als 50 Mol-% einer aromatischen Dicarbonsäure-Einheit (a-2) umfasst.

4. Polyamidzusammensetzung nach einem der Ansprüche 1 bis 3, wobei die Phosphorelementkonzentration 1400 bis 20.000 ppm beträgt.

5. Polyamidzusammensetzung nach einem der Ansprüche 1 bis 4, wobei der Gehalt des Titanoxids (B) 30 bis 65 Massen-% beträgt.

6. Polyamidzusammensetzung nach einem der Ansprüche 1 bis 5, wobei das Polyamid (A) einen Schmelzpunkt von 270 bis 350 °C aufweist.

7. Polyamidzusammensetzung nach einem der Ansprüche 1 bis 6, wobei die alicyclische Dicarbonsäure-Einheit (a-1) eine Einheit, die sich von 1,4-Cyclohexandicarbonsäure ableitet, umfasst.

8. Polyamidzusammensetzung nach einem der Ansprüche 1 bis 7, wobei die phosphorbasierte Verbindung (C) ein Erdalkalimetallsalz umfasst.

9. Polyamidzusammensetzung nach einem der Ansprüche 1 bis 8, wobei das Verhältnis von Metallelementkonzentration zu Phosphorelementkonzentration 0,3 bis 0,8 beträgt, wobei das Verhältnis mittels spektrochemischer ICP-Emissionsanalyse gemessen wird.

10. Polyamidzusammensetzung nach einem der Ansprüche 1 bis 9, ferner umfassend ein Antioxidans (D), wobei das Antioxidans (D) ein phenolisches Antioxidans (D-1) und/oder ein aminbasiertes Antioxidans (D-2) umfasst.

11. Reflektor, umfassend die Polyamidzusammensetzung nach einem der Ansprüche 1 bis 10.

## Revendications

1. Composition polyamide comprenant :

un polyamide (A) comprenant une unité acide dicarboxylique (a) et une unité diamine (b) ;
20 à 70% en masse d'oxyde de titane (B) ; et 0,5 à 7,5% en masse d'un composé à base de phosphore (C), dans laquelle le composé à base de phosphore (C) est un hypophosphite d'un métal.

2. Composition polyamide selon la revendication 1, dans laquelle l'unité acide dicarboxylique (a) comprend 50% ou plus en moles d'une unité acide dicarboxylique alicyclique (a-1).

3. Composition polyamide selon la revendication 1, dans laquelle l'unité acide dicarboxylique (a) comprend plus de 50% en moles d'une unité acide dicarboxylique aromatique (a-2).

4. Composition polyamide selon l'une quelconque des revendications 1 à 3, dans laquelle une concentration en élément phosphore est de 1400 à 20.000 ppm.

5. Composition polyamide selon l'une quelconque des revendications 1 à 4, dans laquelle une teneur en oxyde de titane (B) est de 30 à 65% en masse.

6. Composition polyamide selon l'une quelconque des revendications 1 à 5, dans laquelle le polyamide (A) a un point de fusion de 270 à 350°C.

7. Composition polyamide selon l'une quelconque des revendications 1 à 6, dans laquelle l'unité acide dicarboxylique alicyclique (a-1) comprend une unité dérivée de l'acide cyclohexanedicarboxylique.

8. Composition polyamide selon l'une quelconque des revendications 1 à 7, dans laquelle le composé à base de phosphore (C) comprend un sel de métal alcalino-terreux.

9. Composition polyamide selon l'une quelconque des revendications 1 à 8, dans laquelle un rapport entre la concentration en élément métallique et la concentration en élément phosphore est de 0,3 à 0,8, le rapport étant mesuré par analyse spectrochimique d'émission ICP.

10. Composition polyamide selon l'une quelconque des revendications 1 à 9, comprenant en outre un antioxydant (D), l'antioxydant (D) comprenant un antioxydant phénolique (D-1) et/ou un antioxydant à base d'aminé (D-2).

11. Réflecteur comprenant la composition polyamide selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2976946
- KR 20120066740
- EP 2610313 A
- JP H6503590 B
- JP H11512476 B
- JP 2006257314 A
- JP 2011219697 A
- JP 3059019 A
- JP 4013300 A
- JP 4032775 A
- JP 5017413 A
- JP 7228689 A